# EUROPEAN PATENT APPLICATION

(11) **EP 1 965 372 A1**
(43) Date of publication of application: **03.09.2008**
(21) Application number: 06797276.0
(22) Date of filing: 01.09.2006
(51) Int. Cl.: G09G 3/36, G02F 1/133, G02F 1/13357, G09G 3/20, G09G 3/34

(54) **DISPLAY DEVICE**

(30) Priority: 25.11.2005 JP 2005340671
(71) Applicant: Sharp Kabushiki Kaisha, Osaka-shi, Osaka 545-8522 (JP)
(72) Inventor: MIYATA, Kazuhiko, Osaka 583-0851 (JP); BROWNLOW, Michael James, Oxfordshire, OX14 4JE (GB); WALTON, Harry Garth, Beckley, Oxford, OX3 9UU (GB)
(74) Representative: Brown, Kenneth Richard
(86) International application number: PCT/JP2006/317334
(87) International publication number: WO 2007/060781

(57) **Abstract**

A display device is provided, including a signal transmission mechanism that makes it possible to reduce the number of pins on an FPC board connected to a TFT substrate or eliminate the necessity for the FPC board, and that can be readily applied to a compact device.

The present liquid crystal display device includes light detectors (90), a receiver circuit (100), a display control circuit (200), a video signal line drive circuit (300), a scanning signal line drive circuit (400) , and a display portion 500, which are formed on a TFT substrate of a liquid crystal display panel (2), and it also includes white LEDs (40a) to (40c), and an LED drive circuit (51), which are included in a backlight portion (3). The LED drive circuit (51) drives the white LEDs (40), each emitting a light (modulation) signal LS in accordance with an externally-provided video signal VS. The receiver circuit (100) generates (demodulates) the video signal VS based on a signal received via the light detector (90). Such an optical transmission mechanism makes it possible to reduce the number of pins on the FPC board or eliminate the FPC board.

## Description

### TECHNICAL FIELD

The present invention relates to display devices, and more specifically to a display device employing an optical communication scheme therein.

### BACKGROUND ART

Conventionally, active-matrix liquid crystal display devices provided with TFTs (thin film transistors) as switching elements are known well as general display devices. Such a liquid crystal display device includes a liquid crystal display panel composed of two opposing insulating substrates (typically, glass substrates). One substrate of the liquid crystal display panel (hereinafter, referred to as a "TFT substrate") has scanning signal lines (gate bus lines) and video signal lines (source bus line) provided in the form of a lattice, and the TFT is provided in the vicinity of each intersection between the scanning signal line and the video signal line. The TFT has a gate electrode connected to the scanning signal line, a source electrode connected to the video signal line, and a drain electrode. The drain electrode is connected to one of the pixel electrodes disposed in the form of a matrix on the substrate to form an image.

It is often the case that drive circuits for driving the scanning signal lines and the video signal lines , and a display control circuit for generating, for example, timing signals for driving the drive circuits are integrally formed on the TFT substrate, or part or all of the circuits are mounted on the TFT substrate as an integrated circuit chip. A video signal to be provided to the video signal lines via the display control circuit is externally provided via an FPC (flexible printed circuit) board connected to the TFT substrate. Concretely, the FPC board has an output terminal crimped to a panel input terminal formed on the TFT substrate which is a glass substrate.

In addition, the other substrate of the liquid crystal display panel (hereinafter, referred to as a "CF substrate") is provided with an electrode (hereinafter, referred to as a "common electrode") for providing a voltage to the pixel electrodes via a liquid crystal layer, and individual pixel formation portions are each realized by the pixel electrode, the common electrode, and the liquid crystal layer. Furthermore, disposed on the CF substrate is a color filter, portions of which have colors corresponding to pixel colors to be formed by the pixel formation portions.

When the gate electrode of each TFT receives an active scanning signal (gate signal) via the scanning signal line, a voltage is provided to the liquid crystal layer in the pixel formation portions based on a video signal (source signal) received by the source electrode of the TFT via the video signal line, and a common electrode signal supplied to the common electrode. As a result, the liquid crystal is driven, so that a desired image is displayed on the screen. Note that the display surface of the display device is a surface of the CF substrate that is opposite to a surface facing the TFT substrate.

Liquid crystal display devices as described above are roughly classified into: reflective liquid crystal display devices that effect displays (hereinafter, referred to as "reflection displays") by solely taking advantage of outside light externally coming through the CF substrate; and transmissive liquid crystal display devices that use displays (hereinafter, referred to as "transmissive displays") by taking advantage of transmissive light from a backlighting device provided in a position facing the TFT substrate on the opposite side to the CF substrate. Note that there are also semi-transmissive liquid crystal display devices that mainly effect the transmissive display in a dark place, and mainly effect the reflection display in a bright place.

The backlighting device provided in the transmissive (or semi-transmissive) liquid crystal display device includes a white light emitting diode (LED) or a cold cathode fluorescent tube (CCFT), which acts as a light source, and a light guide plate having incoming light from the light source radiate from its predetermined surface as a sheet of light. Note that (the light source of) the backlighting device is supplied with a predetermined current from an external power source via an FPC board.

As described above, the liquid crystal display device includes the FPC board connected to the TFT substrate of the liquid crystal display panel, and the FPC board connected to (the light source of) the backlighting device; of these, the FPC board connected to the TFT substrate has an extremely large number of connection lines (terminals or pins) , and for example, two-inch liquid crystal display panels as used in cell phones require connection lines just under 40 pins to provide a video signal.

As such, because the FPC board having a large number of pins is crimped to input terminals on the glass substrate, defective connections can readily occur, and even if the connections are satisfactorily completed, the terminals might peel at a later time due to vibrations or repairs after mounting to mobile equipment.

Therefore, for example, there has been provided a liquid crystal display device in which portions of the TFT substrate that have no input terminal disposed thereon are subjected to patterning to alleviate concentration of stress that is caused when crimping the FPC board, thereby inhibiting generation of any cracks (see Patent Document 1).
[Patent Document 1] Japanese Laid-Open Patent Publication No. 2003-149665

### DISCLOSURE OF THE INVENTION

### PROBLEMS TO BE SOLVED BY THE INVENTION

However, the conventional device shown in Patent Document 1 makes it possible to reduce but not avoid any risks incurred due to connection of the FPC board having a large number of pins. In addition, the step of connecting the FPC board itself is complicated, and the use of the FPC board adds to design and production costs. Accordingly, the FPC board is not suitable as a signal transmitter in particular when it has a large number of pins.

Furthermore, recent years have seen an increase of so-called system liquid crystal display panels with the TFT substrate on which are integrated some circuits having functions other than video display (e.g., an audio output circuit, an excitation source, etc.) , and in this case, the number of pins on the FPC board is further increased. For example, the number of input terminal pins that can be formed on the short side of the aforementioned two-inch compact liquid crystal display panel is 60. On the other hand, when an audio circuit is provided on the TFT substrate, the number of required audio input terminal pins is about 20. Accordingly, it is difficult to connect the TFT substrate to the FPC board because the number of terminal pins required for inputting a video signal is less than 40, and moreover, it is conceivable that such a connection is impossible when wiring is installed. Particularly, in such a case, the FPC board might not be suitable as a signal transmitter.

### SOLUTION TO THE PROBLEMS

Therefore, an objective of the present invention is to provide a display device including a signal transmission mechanism that makes it possible to reduce the number of pins on an FPC board connected to a TFT substrate or eliminate the necessity for the FPC board, and that can be readily applied to a compact device.

A first aspect of the present invention is directed to an active-matrix display device having a plurality of pixel formation portions disposed in the form of a matrix at their respective intersections between a plurality of video signal lines and a plurality of scanning signal lines, the device comprising: a first unit having provided therein the pixel formation portions and predetermined circuitry; and a second unit for externally receiving a signal to be provided to the circuitry included in the first unit, the second unit being fixed in a position opposing to the first unit, wherein the second unit includes an optical transmitter for optically transmitting the signal to be provided to the circuitry to the first unit, and wherein the first unit includes an optical receiver for receiving the signal optically transmitted by the optical transmitter, and providing the signal to the circuitry.

In a second aspect of the present invention, based on the first aspect, the optical transmitter includes: a backlight source for emitting illumination light for display to a surface of the first unit that is opposite to a display surface; and a driver for driving the backlight source based on the signal to be provided to the circuitry.

In a third aspect of the present invention, based on the second aspect of the invention, the driver subjects the signal to be provided to the circuitry to conversion for baseband transmission, and drives the backlight source in accordance with a signal obtained by the conversion.

In a fourth aspect of the present invention, based on the second aspect of the invention, the driver performs predetermined modulation for band transmission using the signal to be provided to the circuitry as a modulation signal, and drives the backlight source in accordance with a signal obtained by the modulation.

In a fifth aspect of the present invention, based on the second aspect of the invention, the backlight source is a sheet illuminator for irradiating the first unit with the illumination light almost on the entire surface opposite to the display surface, and the optical receiver receives the illumination light from the backlight source.

In a sixth aspect of the present invention, based on the second aspect of the invention, the optical transmitter includes a light guide for guiding illumination light from the backlight source so that the first unit is irradiated with the light almost on the entire surface opposite to the display surface, and the optical receiver receives the illumination light passing through the light guide.

In a seventh aspect of the present invention, based on the second aspect of the invention, the backlight source includes a light emitting diode.

In an eighth aspect of the present invention, based on the seventh aspect of the invention, the light emitting diode included in the backlight source emits only white light.

In a ninth aspect of the present invention, based on the seventh aspect of the invention, the backlight source includes a plurality of light emitting diodes.

In a tenth aspect of the present invention, based on the ninth aspect of the invention, the driver separates the signal to be provided to the circuitry into a plurality of signals for multi-linking between the light emitting diodes and the optical receiver, and drives the light emitting diodes based on the signals, and the optical receiver includes: a plurality of light detectors uniquely associated with the light emitting diodes; and a restoring portion for restoring the signal to be provided to the circuitry from the signals respectively received by the light detectors.

In an eleventh aspect of the present invention, based on the ninth aspect of the invention, the driver separates the signal to be provided to the circuitry into a plurality of separate signals for which transmission terms in which to transmit the signal to be provided to the circuitry and no-transmission terms are determined such that the transmission terms do not overlap with one another in the optical receiver, the driver drives the light emitting diodes based on the separate signals, and the optical receiver includes: light detectors for receiving light from their respective light emitting diodes; and a restoring portion for restoring the signal to be provided to the circuitry from the signals received by their respective light detectors.

In a twelfth aspect of the present invention, based on the eleventh aspect of the invention, the light emitting diodes are disposed at predetermined intervals, the driver separates the signal to be provided to the circuitry into a plurality of separate signals for which the same transmission terms in which to transmit the signal to be provided to the circuitry and no-transmission terms are determined such that the transmission terms do not overlap with one another in the optical receiver, the driver drives the light emitting diodes based on the separate signals, and the light detectors receive the light from their respective light emitting diodes at different times delayed in accordance with distances from positions of the light emitting diodes.

In a thirteenth aspect of the present invention, based on the ninth aspect of the invention, the light emitting diodes include a plurality of light emitting diodes for emitting light of different colors from one another.

In a fourteenth aspect of the present invention, based on the thirteenth aspect of the invention, the driver drives only one of the light emitting diodes for emitting light of different colors based on the signal to be provided to the circuitry, the diode to be driven emitting a color to which the optical receiver has the highest sensitivity.

In a fifteenth aspect of the present invention, based on the thirteenth aspect of the invention, color filters are provided on optical paths from the light emitting diodes to the optical receiver, the color filters each transmitting light from only one corresponding light emitting diode.

In a sixteenth aspect of the present invention, based on the thirteenth aspect of the invention, further comprised is a chassis provided between the first unit and the second unit to support the first unit or the second unit, and the chassis has a through-hole provided therein to form an optical path from the optical transmitter to the optical receiver.

In a seventeenth aspect of the present invention, based on the second aspect of the invention, the driver drives the backlight source based on the signal to be provided to the circuitry only for a term in which the backlight source is being lit, and the optical receiver receives an optically-transmitted signal only for the term in which the backlight source is being lit.

In an eighteenth aspect of the present invention, based on the seventeenth aspect of the invention, the optical receiver includes a detector for detecting light from the optical transmitter, and receives the optically-transmitted signal only for a term in which the light is being detected by the detector.

In a nineteenth aspect of the present invention, based on the seventeenth aspect of the invention, the driver drives the backlight source such that lighting and extinguishing are repeated at predetermined short time intervals and a predetermined ratio, the driver drives the backlight source based on a signal containing a signal indicating the ratio and the signal to be provided to the circuitry, and based on the ratio indicated by the received signal, the optical receiver receives the optically-transmitted signal only for the term in which the backlight source is being lit.

In a twentieth aspect of the present invention, based on the seventeenth aspect of the invention, the driver drives the backlight source such that lighting and extinguishing are repeated at predetermined short time intervals and a predetermined ratio, the driver drives the backlight source based on a signal containing a signal indicating the ratio and the signal to be provided to the circuitry, and based on the ratio indicated by the received signal, the optical receiver adjusts either light receiving sensitivity or an amplification factor, or both, such that the signal to be provided to the circuitry is satisfactorily received.

In a twenty-first aspect of the present invention, based on the first aspect of the invention, the circuitry includes circuits for driving the video signal lines and the scanning signal lines, respectively, and the optical transmitter optically transmits a video signal to be provided to the circuitry to the first unit.

In a twenty-second aspect of the present invention, based on the first aspect of the invention, the circuitry includes an audio output circuit for outputting audio based on a signal provided thereto, and the optical transmitter optically transmits an audio signal to be provided to the circuitry to the first unit.

In a twenty-third aspect of the present invention, based on the first aspect of the invention, the optical transmitter includes light emitting devices for optical transmission, the optical receiver includes light detectors associated with the light emitting devices, and the light detectors are integrally formed with the circuitry on the first unit.

In a twenty-fourth aspect of the present invention, based on the twenty-third aspect of the invention, the light emitting devices constitute a laser light source.

In a twenty-fifth aspect of the present invention, based on the twenty-third aspect of the invention, the light emitting devices constitute a fluorescent tube light source.

In a twenty-sixth aspect of the present invention, based on the first aspect of the invention, the second unit includes a second coil through which an externally-received alternate current flows, the first unit includes a first coil having a current excited via mutual induction with the second coil, and the first coil provides the excited current to the circuitry as power.

In a twenty-seventh aspect of the present invention, based on the first aspect of the invention, the first unit includes a solar cell, and the solar cell receives light from the optical transmitter or predetermined illumination light, thereby generating a current to be provided to the circuitry as power.

### EFFECT OF THE INVENTION

According to the first aspect of the present invention, the signal externally provided to the second unit is optically transmitted from the optical transmitter to the optical receiver of the first unit having provided therein the pixel formation portions and the predetermined circuitry, and therefore it is possible to omit a transmission medium (typically, the FPC board) for externally providing the signal to the first unit, or it is possible to avoid an increase in the number of pins of the FPC board, regardless of an increase in functions.

According to the second aspect of the present invention, because the signal to be transmitted is transmitted using the backlight source that emits illumination light, it is not necessary to provide an additional light emitting device for optical transmission, and the drive circuit for backlighting can also be used for generating light signals, making it possible to minimize production cost.

According to the third aspect of the present invention, the backlight source is driven by the signal subjected to conversion for baseband transmission, and therefore it is possible to simplify the configuration for conversion. In addition, whentransmittingdigital signals consisting of a pulse string, almost no flickering can occur. Furthermore, when the backlight source is under dimming control by a pulse according to PWM or suchlike, the pulse can be used for baseband transmission, resulting in efficient optical transmission.

According to the fourth aspect of the present invention, because the backlight source is driven by the signal subjected to modulation for band transmission, it is possible to facilitate separation of the modulated signal in the optical receiver, making it possible to reduce transmission errors.

According to the fifth aspect of the present invention, because the backlight source is a sheet illuminator, such as an EL backlight, it is possible to obtain uniform illumination light with a simplified configuration, freely set the position of the optical receiver, and eliminate the necessity to form optical paths for the light, e.g., the necessity to provide through-holes.

According to the sixth aspect of the present invention, because the optical receiver receives the illumination light passing through the light guide, it is possible to freely set the position of the optical receiver compared to the configuration in which the light is directly received from the optical transmitter, and it is also possible to eliminate the necessity to form optical paths for the light, e.g. , the necessity to provide through-holes.

According to the seventh aspect of the present invention, because the backlight source includes the light emitting diode, it is possible to obtain a high-intensity, low-power-consumption backlight source capable of repeating lighting and extinguishing at high speed, making it possible to optically transmit a large amount of information.

According to the eighth aspect of the present invention, because the backlight source includes the light emitting diode that emits only white light, it is possible to readily obtain white light which is a general backlighting color.

According to the ninth aspect of the present invention, because the backlight source includes a plurality of light emitting diodes, it is possible to obtain more intense illumination light than in the case of one light emitting diode.

According to the tenth aspect of the present invention, because the light emitting diodes are driven based on the separate signals obtained via separation for multi-linking by the driver in the optical transmitter, and the signal to be provided to the circuitry is restored based on the received signals in the optical receiver, it is possible to drive the light emitting diodes by such a multi-linking scheme, for example, even when the frequency of the signal to be provided to the circuitry exceeds the maximum frequency at which the light emitting diodes can be driven, and therefore it is possible to optically transmit a large amount of information.

According to the eleventh aspect of the present invention, because the light emitting diodes are driven by the driver in the optical transmitter based on the separate signals for which the transmission terms and no-transmission terms are determined such that they do not overlap with one another (e. g. , they are determined such that predetermined time lags are produced) , and light from the light emitting diodes is received in the optical receiver, it is possible to realize signal transmission with a simplified configuration in which only one light detector is provided. In addition, according to this configuration, signal transmission by the light emitting diodes is not carried out in the no-modulation term, and therefore it is possible to reduce the burden per light emitting diode, resulting in prolongation of its emission lifetime.

According to the twelfth aspect of the present invention, because the light emitting diodes are driven by the driver based on the separate signals for which the same transmission terms and no-transmission terms are determined such that they do not overlap with one another in the optical transmitter, and light from the light emitting diodes is received at different times delayed in accordance with the distances from positions of the light emitting diodes in the optical receiver, it is possible to realize signal transmission with a simplified configuration in which only one light detector is provided, and signal transmission is realized based on the signals having the same transmission terms and the no-transmission terms. In addition, with this configuration, it is possible to reduce the burden per light emitting diode, resulting in prolongation of its emission lifetime.

According to the thirteenth aspect of the present invention, because lighting is provided by the light emitting diodes that emit light of different colors from one another, it is possible to suitably switch the light emitting diode for light emission, thereby making it possible to suitably select the color of illumination light.

According to the fourteenth aspect of the present invention, because only the light emitting diode that emits a color to which the optical receiver has the highest sensitivity is driven, it is possible to achieve higher light sensitivity than the sensitivity to white light, for example.

According to the fifteenth aspect of the present invention, because the color filter is further provided on the optical path from each light emitting diode to the optical receiver, it is possible to provide the optical receiver with only a necessary light signal using a simplified configuration.

According to the sixteenth aspect of the present invention, because the chassis is provided with the through-hole for forming an optical path from the optical transmitter to the optical receiver, it is possible to secure an optical transmission path with a simplified configuration.

According to the seventeenth aspect of the present invention, because the optical receiver receives the optically-transmitted signal only for the term in which the backlight source is being lit, no signal receiving operation is performed during the term in which no lighting is provided. As a result, it is possible to prevent wrong signals from being outputted during the term in which no lighting is provided.

According to the eighteenth aspect of the present invention, because the optically-transmitted signal is received only for the term in which light is being detected by the detector, it is possible to prevent wrong signals from being outputted during the term in which no lighting is provided using a simplified configuration.

According to the nineteenth aspect of the present invention, because the signal indicating the ratio of the lighting term and the extinguishing term of the backlight source is transmitted from the optical transmitter to the optical receiver, it is possible to ensure that the optically-transmitted signal is received only for the term in which the backlight source is being lit with reference to the ratio without the receiver detecting whether the backlight source is being lit.

According to the twentieth aspect of the present invention, because adjustments are made to either the light receiving sensitivity or the amplification factor, orboth, based on the ratio of the lighting term and the extinguishing term of the backlight source, it is possible to make preferred adjustments such that the signal to be provided to the circuitry can be satisfactorily received with a simplified configuration.

According to the twenty-first aspect of the present invention, because the video signal is transmitted, it is possible to omit a transmission medium (typically, the FPC board) for externally providing the video signal to the first unit, or it is possible to avoid an increase in the number of pins of the medium.

According to the twenty-second aspect of the present invention, because the audio signal is transmitted, it is possible to avoid an increase in the number of pins of the transmission medium (typically, the FPC board) for externally providing the audio signal to the first unit, regardless of the increase of the audio functions.

According to the twenty-third aspect of the present invention, because the light detectors are integrally formed on the first unit, it is possible to achieve simplified, inexpensive production, and it is also possible to suitably utilize the illumination light when they are formed in the form of thin films so that, the sensitivity, particularly to white light, is enhanced.

According to the twenty-fourth aspect of the present invention, the laser light source is used, resulting in high-speed (high-density) optical transmission compared to the case of using the light emitting diodes.

According to the twenty-fifth aspect of the present invention, the fluorescent tube light source is used, resulting in cost reduction, and for example, the use of an inverter or suchlike results in a more simplified configuration.

According to the twenty-sixth aspect of the present invention, the current excited in the first coil is provided to the circuitry as power, making it possible to omit the medium (typically, the FPC board) for externally providing power to the first unit.

According to the twenty-seventh aspect of the present invention, the current generated by the solar cell is provided to the circuitry as power, making it possible to omit the medium (typically, the FPC board) for externally providing power to the first unit using a simplified configuration.

### BRIEF DESCRIPTION OF THE DRAWINGS

FIG. 1 is a perspective view for describing a partial structure of a liquid crystal display device according to a first embodiment of the present invention.
FIG. 2 is a top view for concisely describing the configuration of a backlight portion in the embodiment.
FIG. 3 is a diagram for concisely describing the configuration of a liquid crystal module including the backlight portion and a liquid crystal display panel in the embodiment.
FIG. 4 is a diagram for describing the positional relationship between light detectors and white LEDs in the embodiment.
FIG. 5 is a cross-sectional view concisely illustrating the structure of the light detectors in the embodiment.
FIG. 6 is in the embodiment

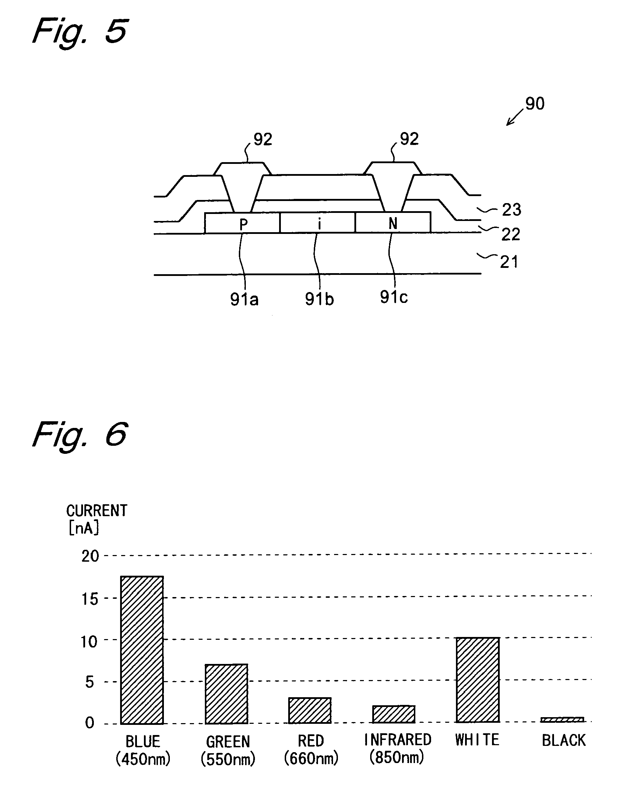

   FIG. 6 is a graph showing current values measured when irradiating the light detector 90 with light of different wavelengths.

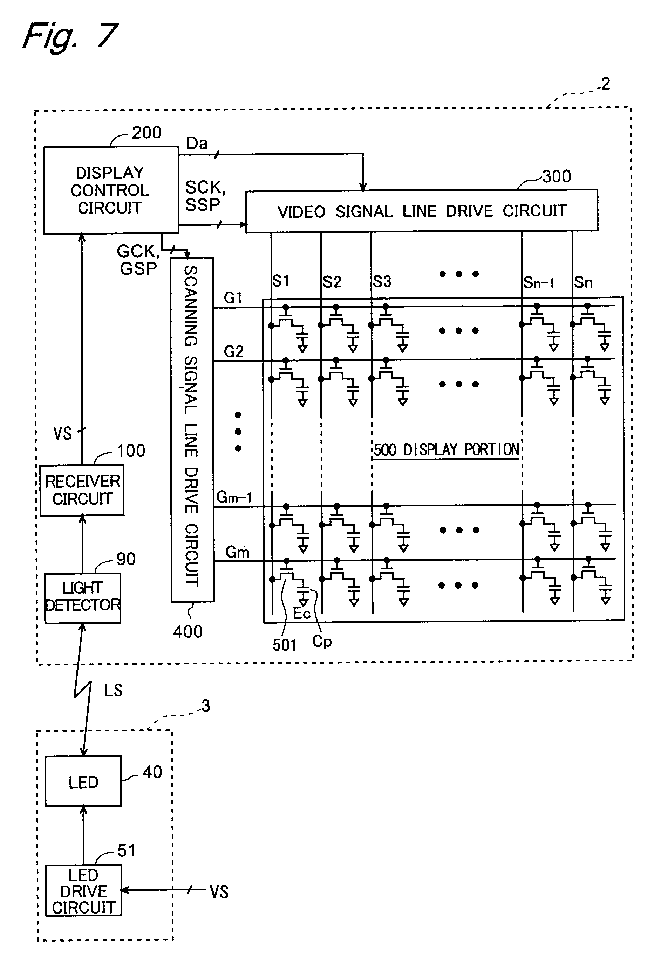

FIG. 7 is a block diagram illustrating the circuit configuration of the liquid crystal display device in the embodiment.

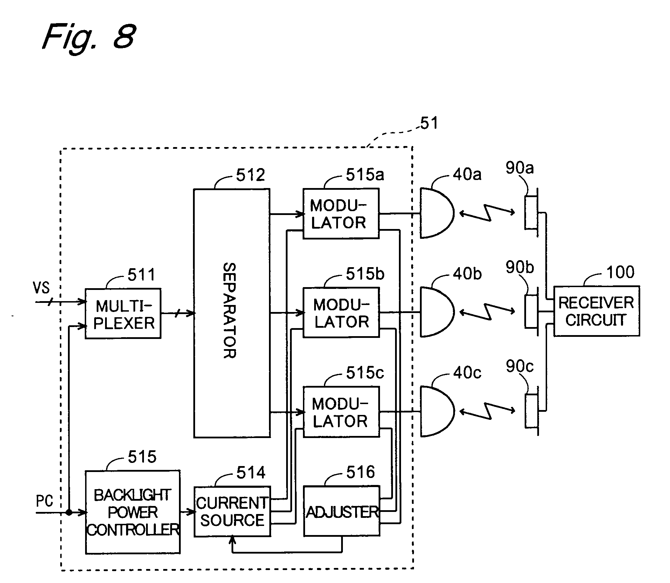

FIG. 8 is a block diagram illustrating a detailed configuration of an LED drive circuit in the embodiment.

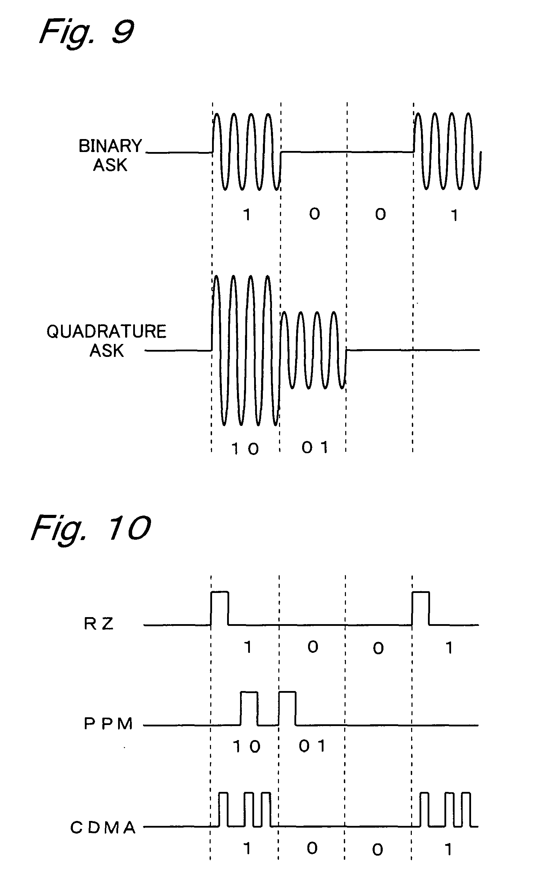

FIG. 9 is a waveform diagram concisely illustrating modulated signals subjected to digital modulation according to band transmission schemes in the embodiment.
FIG. 10 is a waveform diagram concisely illustrating modulated signals subjected to digital modulation according to baseband transmission schemes in the embodiment.

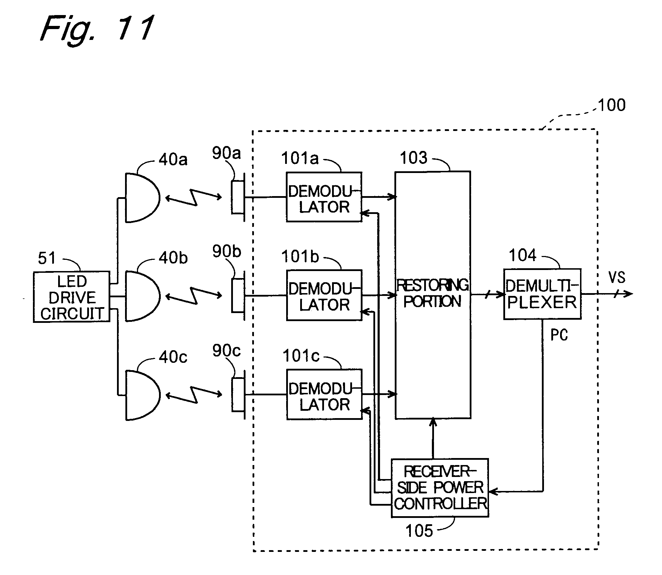

FIG. 11 is a block diagram illustrating a detailed configuration of a receiver circuit in the embodiment.

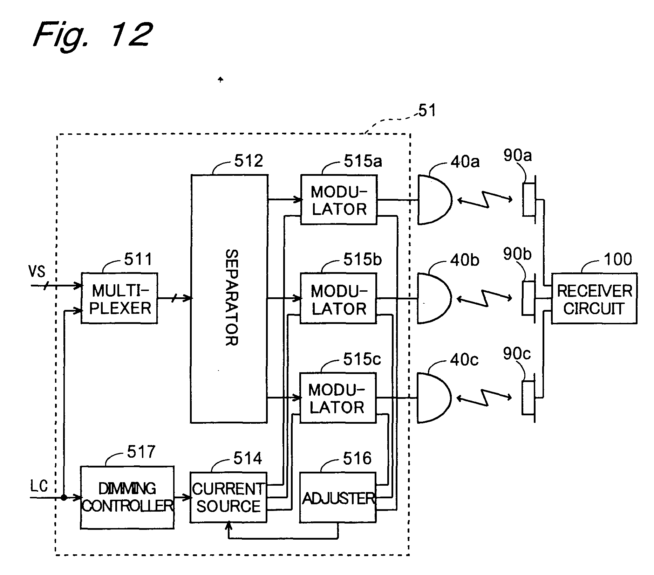

FIG. 12 is a block diagram illustrating a detailed configuration of an LED drive circuit in a second embodiment of the present invention.

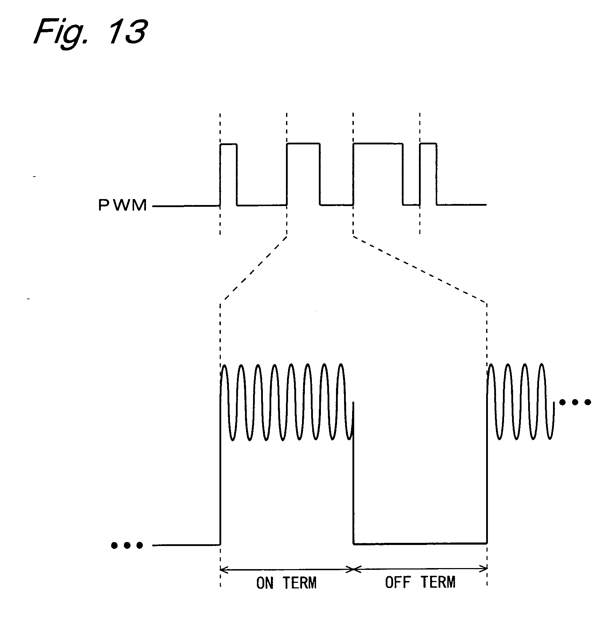

FIG. 13 is a simplified waveform diagram of a light signal LS subjected to dimming control in the embodiment.

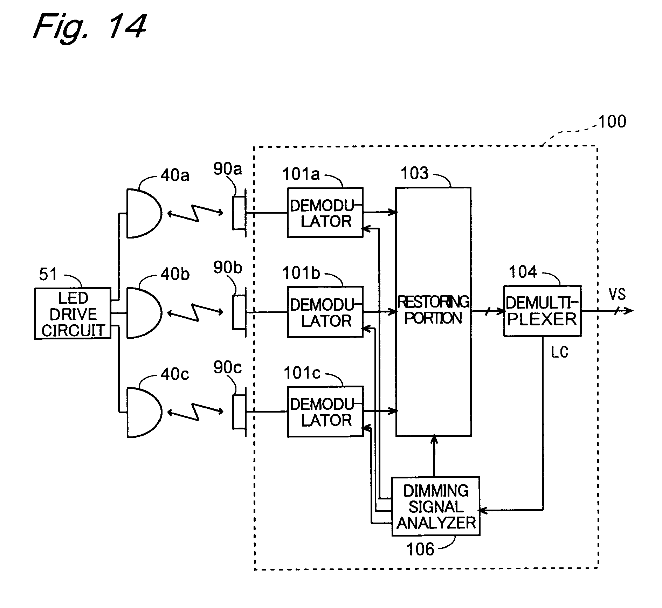

FIG. 14 is a block diagram illustrating a detailed configuration of a receiver circuit in the embodiment.

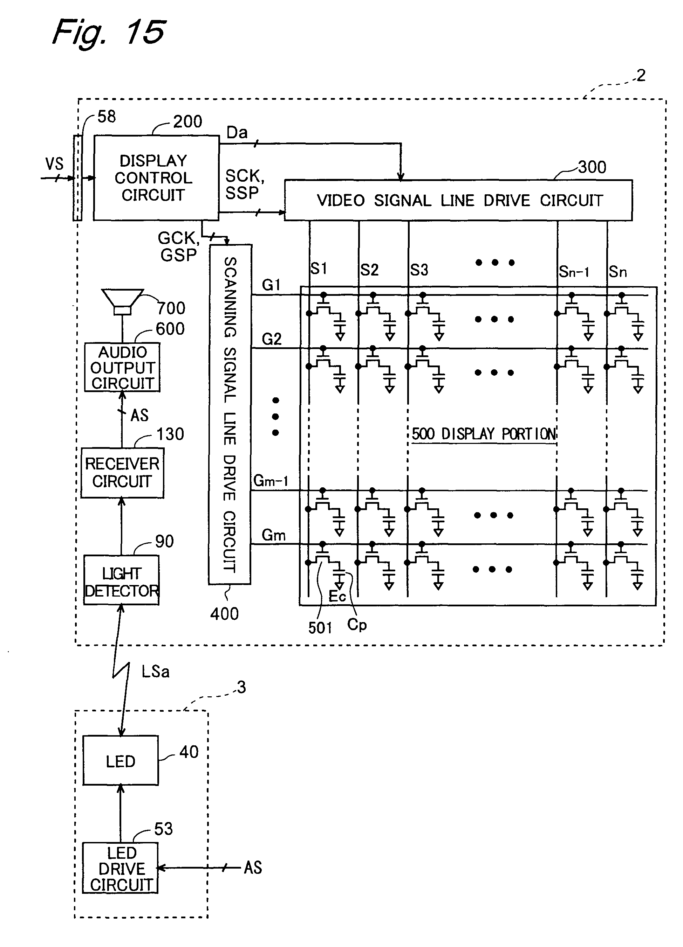

FIG. 15 is a block diagram illustrating the configuration of a liquid crystal display device in a third embodiment of the present invention.

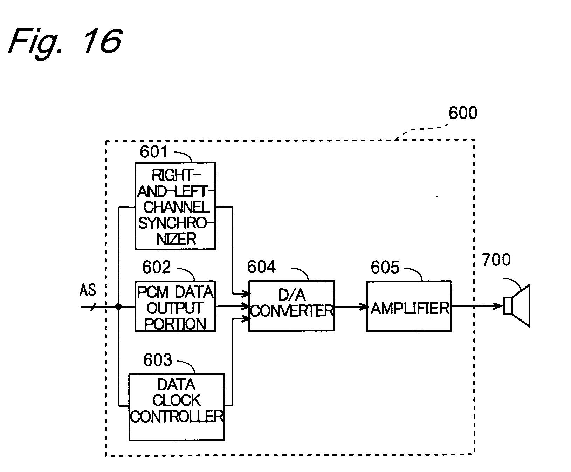

FIG. 16 is a block diagram illustrating the circuit configuration of an audio output circuit in the embodiment.

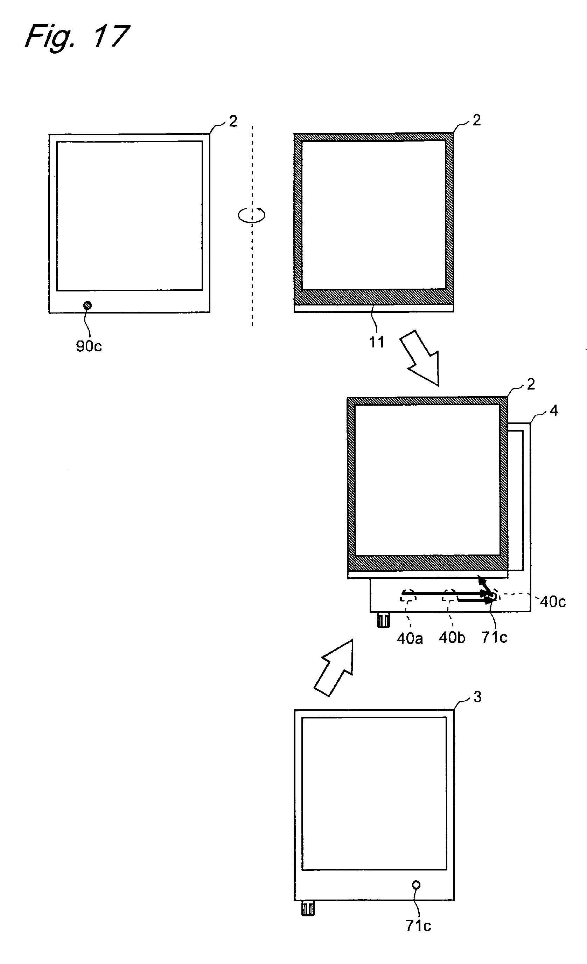

FIG. 17 is a diagram for describing the positional relationship between light detectors and white LEDs in a fourth embodiment of the present invention.

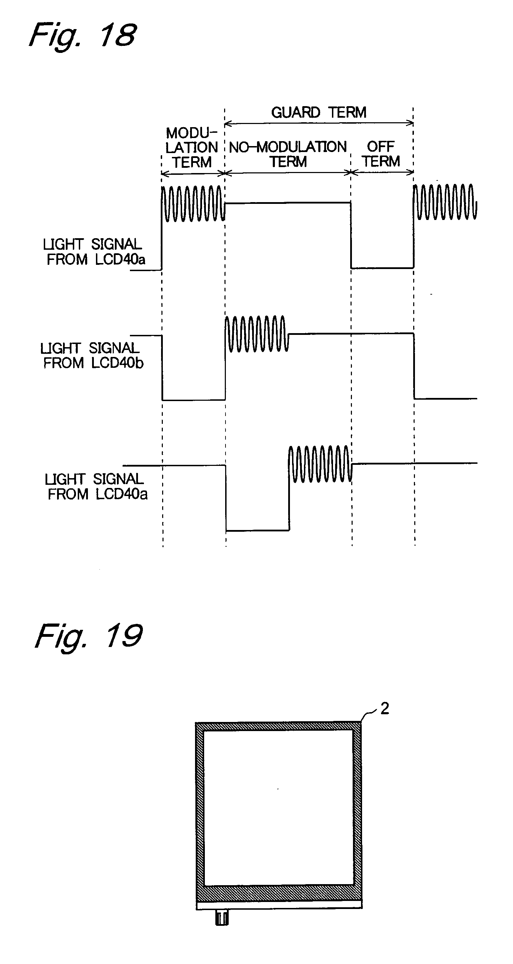

FIG. 18 is a waveform diagram schematically illustrating light signals from the white LEDs immediately before being received by the light detectors in the embodiment.
FIG. 19 is a top view illustrating an FPC for power supply in a variant of each embodiment.

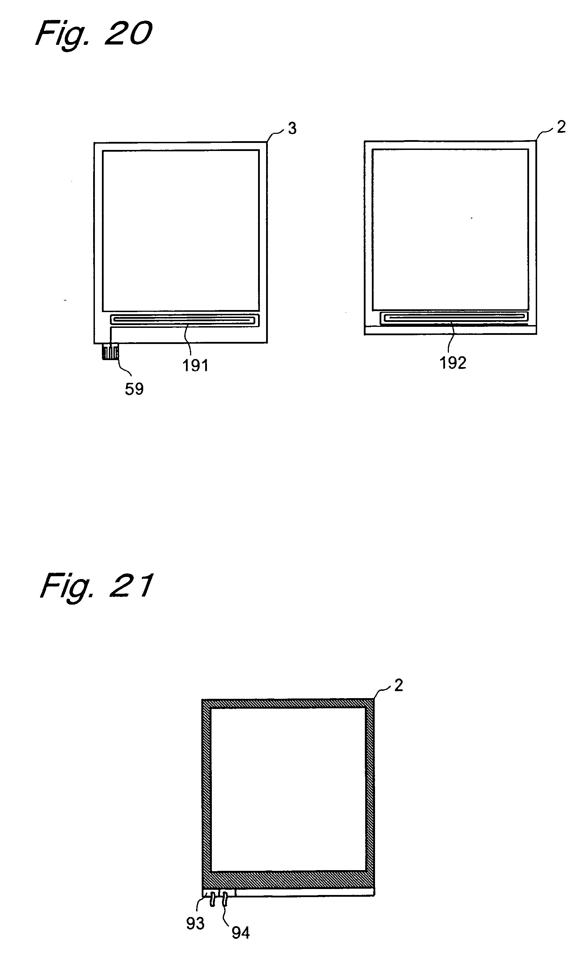

FIG. 20 is a top view for describing power supply by a coil, rather than by the FPC for power supply in the variant.
FIG. 21 is a top view for describing power supply by a pin formed on a TFT substrate, rather than by the FPC for power supply in the variant.

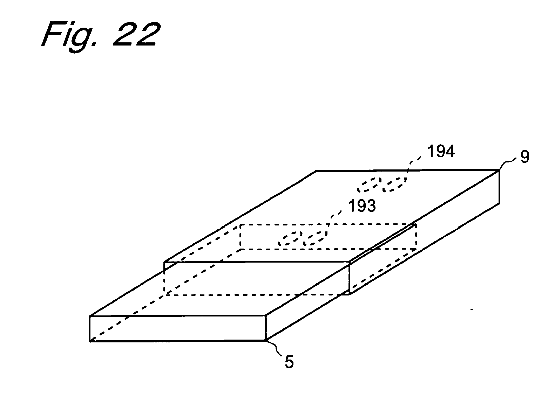

FIG. 22 is a simplified perspective view for describing the configuration of a liquid crystal module freely detachable from a casing of an external device in the variant.

### DESCRIPTION OF THE REFERENCE CHARACTERS

- 2: liquid crystal display panel
- 3: backlight portion
- 4: liquid crystal module
- 9: casing of external device
- 10: TFT substrate
- 11: black matrix
- 20: CF substrate
- 30: optical element
- 50: FPC board
- 51: to 53 LED drive circuit
- 58: FPC board
- 59: FPC input terminal
- 60: lower bezel portion
- 70: resin chassis
- 71a: to 71c through-hole
- 80: upper bezel
- 90a: to 90c light detector
- 93,: 94 pin
- 100, 120, 130: receiver circuit
- 101a to 101c: drive circuit
- 102a, 102c: demodulator
- 103: restoring portion
- 104: demultiplexer
- 105: receiver-side power controller
- 106: dimming signal analyzer
- 191, 192: coil
- 193: power receiving pin
- 194: power supply pin
- 200: display control circuit
- 300: video signal line drive circuit
- 400: scanning signal line drive circuit
- 500: display portion
- 511: multiplexer
- 512: separator
- 513: backlight power controller
- 514: current source
- 515a to 515c: modulator
- 516: adjuster
- 517: dimming controller
- 600: audio output circuit
- 700: piezoelectric loudspeaker
- Da: digital image signal
- VS: video signal
- AS: audio signal
- LC: dimming parameter signal
- LS, LSa: light signal
- Lg: scanning signal line
- PS: power control signal
- VS: video signal

### BEST MODE FOR CARRYING OUT THE INVENTION

Hereinafter, first and second embodiments of the present invention and variants thereof will be described with reference to the accompanying drawings.

### <1. first embodiment>

### <1.1 overall configuration and operation>

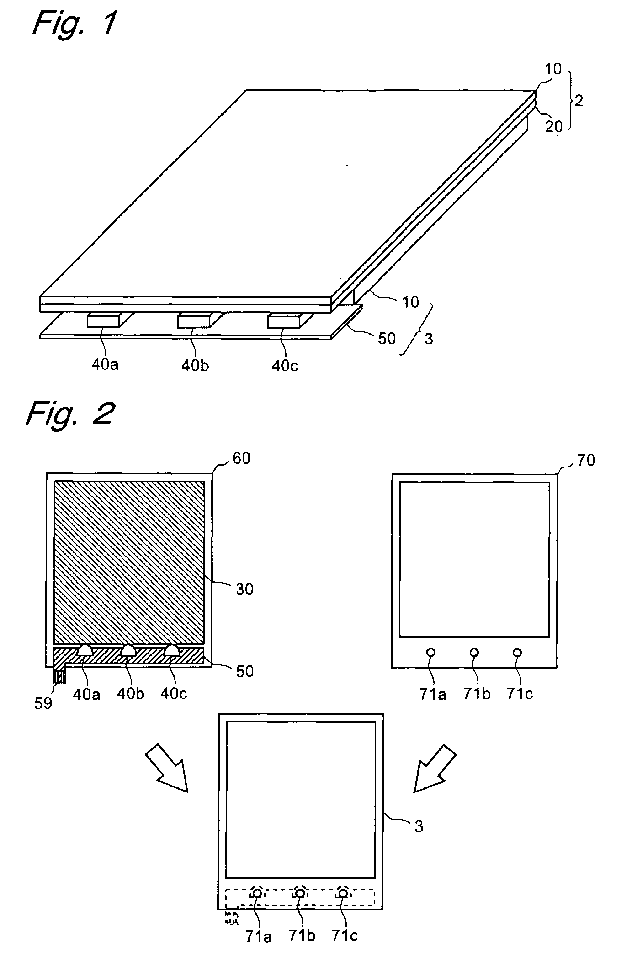

FIG. 1 is a perspective view for describing a partial structure of a liquid crystal display device according to the first embodiment of the present invention. This liquid crystal display device is a transmissive (or semi-transmissive) liquid crystal display device configured almost in the same manner as conventionally but differing from the conventional configuration in that light detectors and a receiver circuit for signal transmission to be described later are additionally included, in place of the FPC board for video signal transmission.

As shown in FIG. 1, the liquid crystal display device includes: a liquid crystal display panel (liquid crystal display unit) 2, which includes a CF substrate 10 similar to the conventional one and a TFT substrate 20 differing from the conventional one and having formed thereon light detectors and a receiver circuit; and a backlight portion (backlight unit) 3 , which includes white LEDs 40a to 40c acting as backlight sources for transmissive displays, and an optical element 30 such as a light guide plate. In addition, a current containing a signal (a modulated signal) obtained via modulation by a predetermined modulation scheme is provided to the white LEDs 40a to 40c included in the backlight portion 3 from an external signal source via an FPC board (and an LED drive circuit). Note that the LEDs are high-intensity, low-power-consumption light emitting devices capable of repeating lighting and extinguishing at high speed, and therefore they are suitable as the light emitting devices in the present embodiment. The details thereof will be described later.

Note that as in the conventional configuration, the liquid crystal display panel 2 has a polarizing sheet attached on at least one surface, and the light guide plate included in the backlight portion 3 and acting as a light guide has a lens sheet, a light diffusion sheet, or the like attached on its light emission surface, and a reflective sheet on its opposite surface. With this configuration, the backlight portion 3 functions as a sheet lighting device that provides backlighting for liquid crystal displays. Although three white LEDs 40a to 40c are provided here, the number of which is not particularly limited.

FIG. 2 is a top view for concisely describing the configuration of the backlight portion 3. A lower bezel portion 60 shown on the top left side in FIG. 2 has a tray-like shape to accommodate the optical element 30, such as a light guide plate, and an FPC board 50 having the white LEDs 40a to 40c mounted thereon, such that they are secured in a predetermined positional relationship. Note that the FPC board 50 has formed at one end an FPC input terminal 59 for receiving a current to drive the white LEDs 40a to 40c.

The backlight portion 3 shown at the bottom of FIG. 2 is produced by securing a resin chassis 70 with through-holes 71a to 71c shown on the top right side in FIG. 2 so as to cover the top side of the lower bezel portion 60, i.e. , the light emission surface side facing the liquid crystal display panel 2.

Here, the positions of the through-holes 71a to 71c in the resin chassis 70 are uniquely associated with the positions of the white LEDs 40a to 40c of the backlight portion 3, as shown at the bottom of FIG. 2. Accordingly, rays of light emitted from the white LEDs 40a to 40c propagate through the light guide plate, etc., to exit the emission surface upward (toward the liquid crystal display panel 2) , and they also propagate through their corresponding through-holes 71a to 71c before being provided to the light detectors of the liquid crystal display panel 2 to be described below.

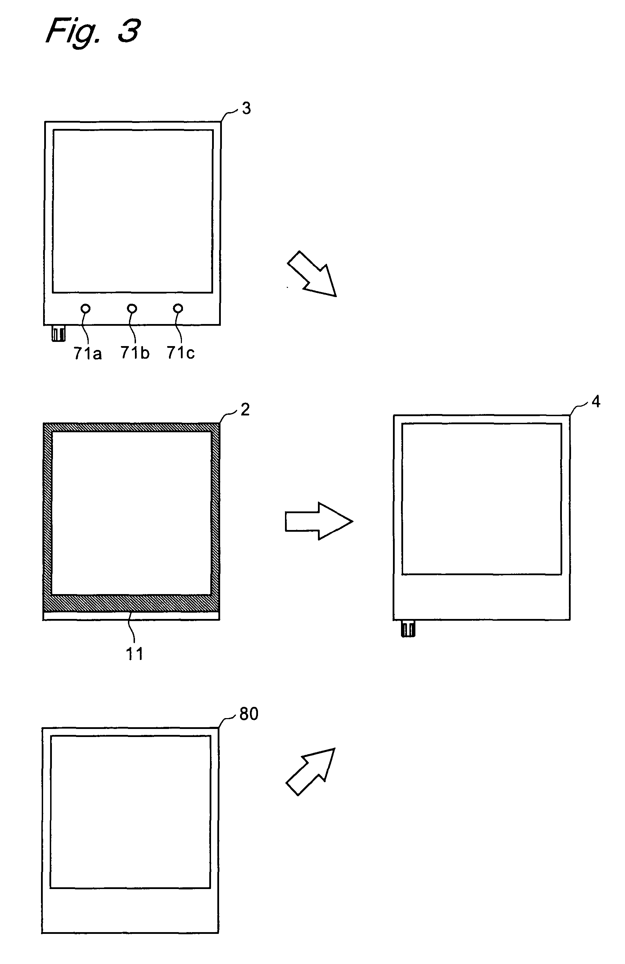

The backlight portion 3 thus produced is disposed at the bottom of the liquid crystal display panel 2, i.e. , the surface opposite to the display surface. FIG. 3 is a diagram for concisely describing the configuration of a liquid crystal module including the backlight portion and the liquid crystal display panel. The liquid crystal module 4 shown at the bottom of FIG. 3 is produced by disposing the backlight portion 3 at the bottom of the liquid crystal display panel 2, and securing an upper bezel 80 so as to cover the top side (the display surface side) of the liquid crystal display panel 2, as shown in FIG. 3.

Note that a light-shielding black matrix 11 is formed on the display surface side of (the CF substrate 10 of) the liquid crystal display panel 2. The black matrix 11 prevents light from the backlight portion 3 from leaking out of anywhere but the display surface, and it also prevents any circuits formed on the TFT substrate 20 from being affected by outside light. The structure of the black matrix 11 is well-known, and therefore any detailed description thereof will be omitted.

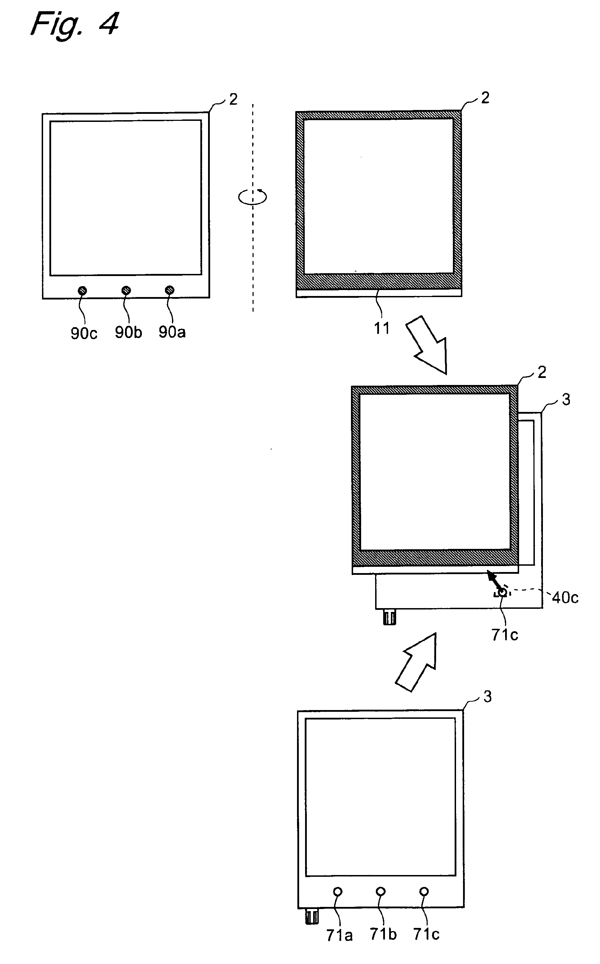

FIG. 4 is a diagram for describing the positional relationship between the light detectors and the white LEDs. The light detectors 90a to 90c are formed at predetermined intervals on the bottom surface of the liquid crystal display panel 2, i.e. , the surface opposite to the display surface, as shown on the top left side in FIG. 4. Concretely, the light detectors 90a to 90c are PIN-type photodiodes formed on the glass substrate of the TFT substrate 20 by a fabrication process similar to that for the TFTs, and they receive light from the white LEDs 40a to 40c, thereby outputting a current in an amount corresponding to the intensity of the light. The structure will be described later. Note that as described earlier in conjunction with FIG. 3, the black matrix 11 is formed on the top surface of the liquid crystal display panel 2, i.e., the display surface.

The light detectors 90a to 90c formed on the bottom surface of the liquid crystal display panel 2 are secured in the positions uniquely associated with the white LEDs 40a to 40c disposed on the backlight portion 3, as shown in FIG. 4. For example, the light emitted from the white LED 40c is provided to the light detector 90c via the through-hole 71c. Note that rays of light traveling from the white LEDs 40a to 40c toward the light guide plate are diffused and mixed, but rays of light provided from the white LEDs 40a to 40c to the light detectors 90a to 90c, respectively, should not be mixed (at least not preferably) , and therefore, for example, dividing walls or light guide portions for shielding light between each of the white LEDs 40a to 40c may be provided in order to cause each of the rays of light from the white LEDs 40a to 40c to pass through only one uniquely-associated hole from among the through-holes 71a to 71c. In addition, a dividing wall or enclosure may be provided around each of the through-holes 71a to 71c such that unwanted light, such as outside light, is shielded so as not to be incident on the light detectors 90a to 90c. Furthermore, the through-holes 71a to 71c may be filled with glass or suchlike, or a light guide portion made up of a plurality of materials with different refraction indices may be provided such that its cross-sectional structure is similar to that of optical fiber. The light detectors 90a to 90c (collectively referred to as the "light detector 90" when they are not distinguished) will be described next with reference to FIGS. 5 and 6.

### <1.2 configuration and characteristics of the light detector>

FIG. 5 is a cross-sectional view concisely illustrating the structure of the light detector 90. The light detector 90 includes a semiconductor layer 91 formed on a glass substrate 21 included in the TFT substrate 20, a gate insulation film 22 formed to cover the semiconductor layer 91, an inter-layer insulation film 23 formed thereon, and electrodes 92 electrically connected to portions of the semiconductor layer 91 via contact holes opened to pierce through the insulation films, as shown in FIG. 5. Note that descriptions about a planarizing film, etc., are omitted.

In addition, because a "P" region 91a and an "N" region 91c of the semiconductor layer 91 are doped with a predetermined impurity, and an "i" region 91b is not doped with any impurity, a PIN junction is formed in the direction along the surface of the glass substrate 21, as shown in FIG. 5. The light detector 90 thus structured is well-known, and referred to as a laterally-structured PIN-type photodiode. The light detector 90 thus structured can be formed by the same process as that for the TFTs , and therefore can be produced at low cost. Note that silicon used for the semiconductor layer may be noncrystalline silicon, but to enhance the degree of circuit integration, it is preferably polycrystalline silicon, more preferably continuous grain (CG) silicon with high electron mobility. Note that in place of such a light detector 90 integrally formed on the TFT substrate 20, discrete light detectors (e.g., general photodiode devices) may be mounted on the TFT substrate 20.

In addition, the structure of the light detector 90 is suitable for the optical transmission scheme in the present invention where visible light (here, white light) is used. FIG. 6 is a graph showing current values measured when irradiating the light detector 90 with light of different wavelengths. Note that the gate length L and the gate width of the light detector 90 used for the measurements are 7 [µm] and 5,000 [µm], respectively.

The output current of the light detector 90 decreases (i.e. , the sensitivity of the device decreases) as the wavelength of light increases, as shown in FIG. 6, but the sensitivity to white light is demonstrated to be relatively high. On the other hand, in many cases, the output current of general (non-filmy) photodiode devices increases mainly in the infrared region, and therefore it is often the case that the sensitivity to white light is low. Accordingly, the light detector 90 is suitable for the optical transmission scheme in the present invention where white light is used. The circuit configuration of the liquid crystal display device in the present embodiment will be described next.

### <1.3 overall circuit configuration of the display device>

FIG. 7 is a block diagram illustrating the circuit configuration of the liquid crystal display device according to the first embodiment of the present invention. The liquid crystal display device includes the light detector 90, a receiver circuit 100, a display control circuit 200, a video signal line drive circuit 300, a scanning signal line drive circuit 400, and a display portion 500, which are formed on the TFT substrate 20 of the liquid crystal display panel 2, and it also includes the white LEDs 40a to 40c (hereinafter, collectively referred to as the "white LED 40" when they are not distinguished) and an LED drive circuit 51, which are included in the backlight portion 3.

A video signal VS, which contains, for example, a signal representing an image to be displayed on the liquid crystal display device and a predetermined timing signal, is externally provided through the input terminal 59 of the FPC board 50 to the LED drive circuit 51, which is formed in the FPC board 50 or mounted on the FPC board 50 as an integrated circuit. The LED drive circuit 51 drives the white LED 40, which outputs (emits) a light (modulation) signal LS in accordance with the video signal VS. The details of the LED drive circuit 51 will be described later. Note that the LED drive circuit 51 does not always have to be mounted on the FPC board 50. In addition, the receiver circuit 100 and other circuits do not always have to be integrally formed on the TFT substrate 20, and they may be provided in any form, e.g., they may be mounted on the TFT substrate 20 as an integrated circuit.

The light detector 90 included in the TFT substrate 20 converts the light signal LS received from the white LED 40 included in the backlight portion 3 into an electric signal, and provides it to the receiver circuit 100. The receiver circuit 100 generates (demodulates) a video signal VS based on the received electric signal, and provides it to the display control circuit 200.

Based on the video signal VS received from the receiver circuit 100, the display control circuit 200 generates various signals, including a source clock signal SCK and a source start pulse signal SSP, which are provided to the video signal line drive circuit 300 for display on the liquid crystal display panel, as well as a gate clock signal GCK and a gate start pulse signal GSP, which are provided to the scanning signal line drive circuit 400 for display. Note that these signals are well-known, and therefore any detailed descriptions thereof will be omitted. In addition, the display control circuit 200 supplies a digital image signal Da to the video signal line drive circuit 300 based on the video signal VS.

As described above, data representing an image to be displayed on the display portion 500 is supplied to the video signal line drive circuit 300 as the digital image signal Da for each pixel, and the source clock signal SCK, the source start pulse signal SSP, etc. , are also supplied as signals indicating timing. Based on the digital image signal Da, the source clock signal SCK, the source start pulse signal SSP, etc., the video signal line drive circuit 300 generates drive video signals S1 , S2, S3, ..., Sn (where n is the number of video signal lines) , which are analog voltages for driving the display portion 500, and it applies them to the video signal lines of the display portion 500. The drive video signals S1 , S2 , S3 , ..., Sn have their polarities inverted for AC conversion drive of the display portion 500 in accordance with an unillustrated polarity switch control signal.

Based on the gate clock signal GCK and the gate start pulse signal GSP, the scanning signal line drive circuit 400 generates scanning signals G1 , G2, G3, ..., Gm (where m is the number of scanning signal lines) that are to be applied to the scanning signal lines of the display portion 500 in order to sequentially select the scanning signal lines, each line for one horizontal scanning period, and it repeatedly applies the active scanning signals to all the scanning signal lines in cycles of one vertical scanning period in order to sequentially select the scanning signal lines.

The display portion 500 includes: a plurality of scanning signal lines (row electrodes) corresponding to their respective horizontal scanning lines in an image represented by the video signal; a plurality of video signal lines (column electrodes) crossing each of the scanning signal lines; and a plurality of pixel formation portions provided at their respective intersections between the scanning signal lines and the video signal lines.

Each of the pixel formation portions is composed of: a TFT 501 having a source terminal connected to the video signal line passing through its corresponding intersection and a gate terminal connected to the scanning signal line passing through the corresponding intersection; a pixel electrode connected to a drain terminal of the TFT 501; a common electrode (also referred to as an "opposing electrode") Ec commonly provided for the pixel formation portions; and a liquid crystal layer commonly provided for the pixel formation portions and sandwiched between the pixel electrode and the common electrode Ec. The pixel electrode Ep, the common electrode Ec, and the liquid crystal layer sandwiched therebetween form a pixel capacitance Cp. Note that the TFT substrate 20 includes the signal lines, the TFTs, the pixel electrodes, and so on, and the CF substrate 10 includes the common electrode Ec, as well as a color filter, various optical compensating films, etc., which are not shown.

As is apparent from the above configuration, in the display portion 500, when a scanning signal Gk (where k is a natural number from 1 to m) applied to any one scanning signal line Lg is activated, the scanning signal line is selected, so that the TFT 501 of each pixel formation portion connected to the scanning signal line is rendered conductive, and a drive video signal Sj (where j is a natural number from 1 to n) is applied to the pixel electrode connected to the TFT 501, via the video signal line. As a result, the voltage of the applied drive video signal Sj (the voltage based on the potential of the common electrode Ec) is written to the pixel formation portion including the pixel electrode as a pixel value. Thus, the display portion 500 displays the image represented by the video signal VS. A detailed circuit configuration of the LED drive circuit 51 will be described next with reference to FIG. 8.

### <1.4 configuration of the LED drive circuit>

FIG. 8 is a block diagram illustrating a detailed configuration of the LED drive circuit 51. As shown in FIG. 8, the LED drive circuit 51 includes: a multiplexer 511, which receives from outside the liquid crystal display device a video signal VS, and a power control signal PS for controlling operations of the power source of the LED drive circuit 51, etc. , and multiplexes them; a separator 512 for separating a signal obtained via multiplexing into three signals by a well-known multi-linking scheme; modulators 515a to 515c for outputting drive currents, including modulated signals for driving their respective white LEDs 40a to 40c, based on a modulation signal obtained by modulating a predetermined signal based on its corresponding signal received from the separator 512; a current source 514 for providing the modulators 515a to 515c with a current for driving their respective white LEDs 40a to 40c; an adjuster 516 for adjusting the output current from the current source 514 based on the drive currents for the white LEDs 40a to 40c from the modulators 515a to 515c; and a backlight power controller 513 for performing control to stop or start the operation of the current source 514 based on the power control signal PS.

Note that the video signal VS and the power control signal PS are externally provided to the multiplexer 511 via the input terminal 59 of the FPC board 50, as described above, but they may be provided via an input terminal of the FPC board 50 different from the input terminal 59 or may be provided without passing through the FPC board 50.

The multiplexer 511 multiplexes the received video signal VS and power control signal PS, and because these signals are digital signals, the signal obtained by multiplexing them with a well-known digital multiplexing scheme is also a digital signal. Note that the power control signal PS is converted to a light signal and transmitted to the receiver circuit 100 included in the TFT substrate 20, as described later, but it might not be transmitted when power control for the TFT substrate 20 is not necessary. In such a case, the multiplexer 511 is omitted.

The power control signal PS is provided to the multiplexer 511, and also to the backlight power controller 513. The power control signal PS is an external control signal, and it is active when the device is operating, and is deactivated when the device is stopped. The backlight power controller 513 stops the operation of the current source 514 when the power control signal PS is deactivated, and it performs control to start the operation of the current source 514 when the signal PS is activated. Note that the backlight power controller 513 preferably performs control to simultaneously stop or start circuits included in the LED drive circuit 51, excepting the current source 514. Note that the power control signal PS is transmitted after being converted to a light signal, and therefore the backlight power controller 513 preferably performs the above stop operation after the transmission operation.

The separator 512 separates the digital signal obtained via multiplexing by the multiplexer 511 as information to be transmitted into three signals, so that the signals are separately transmitted to their respective three optical transmission paths formed between the white LEDs 40a to 40c and the light detectors 90a to 90c. Transmitting information to be transmitted to a plurality of physical transmission paths in such a manner is referred to as "multi-linking". Concretely, the separator 512 that separates the signal to perform multi-linking provides the digital signal obtained via multiplexing to the modulators 515a to 515c after reducing the frequency (e.g., lengthening the pulse period), for example, by dividing the signal into three pieces in predetermined amounts in a time-series manner, thereby dividing the frequency at a frequency division ratio of 1/3. With this configuration, it is possible to drive the white LEDs 40a to 40c by such a multi-linking scheme even when the maximum frequency at which the white LEDs 40a to 40c can be driven falls below the frequency of the video signal VS or of a signal obtained by modulation based on the video signal VS (e.g., even when it is about half the frequency).

For example, the modulators 515a to 515c digitally modulate a predetermined frequency carrier wave obtained from an unillustrated local oscillator, based on the signal received from the separator 512. Note that the frequency is preferably a frequency that is at least invisible to or difficult to sense with the eye. Examples of such a digital modulation scheme include various band transmission schemes, suchasASK (amplitude shift keying) , FSK (frequency shift keying), and PSK (phase shift keying) , and various baseband transmission schemes, such as an RZ (return to zero) scheme, and any of the above can be employed here. Note that the modulation by the modulators 515a to 515c herein widely encompasses signal conversion or encoding by the baseband transmission scheme, in addition to the modulation by the band transmission scheme. Furthermore, various well-known multiple access schemes, such as CDMA (code division multiple access) utilizing any of the above schemes, can also be employed.

Note that the modulators 515a to 515c may be omitted so that the three signals from the separator 512 are provided to the white LEDs 40a to 40c without any modification or via an amplifier. In addition, various well-known analog modulation schemes may be employed. Some of the modulation schemes will be described next with reference to FIGS. 9 and 10.

FIG. 9 is a waveform diagram concisely illustrating modulated signals subjected to digital modulation according to band transmission schemes. Note that numbers assigned below the signals indicate the content of information about a digital signal which is a modulation signal.

The waveform shown at the top of FIG. 9 indicates a binary ASK-modulated signal. The binary ASK is a modulation scheme for correlating 1-bit information ("1" or "0") of the digital signal to two types of amplitudes of the carrier wave (or the presence or absence of the carrier wave). The waveform shown at the bottom of FIG. 9 indicates a quadrature ASK-modulated signal. The quadrature ASK is a modulation scheme for correlating 2-bit information of the digital signal to four types of amplitudes of the carrier wave. Note that these band transmission schemes facilitate separation of the modulated signal on the receiver side, making it possible to reduce transmission errors.

FIG. 10 is a waveform diagram concisely illustrating modulated signals subjected to digital modulation according to baseband transmission schemes. Note that numbers assigned below the signals indicate the content of information about a digital signal which is a modulation signal. Note that when digital signals consisting of a pulse string are transmitted in accordance with the baseband schemes, almost no flickering can occur.

The waveform shown at the top of FIG. 10 indicates an RZ-modulated signal. The RZ is a transmission scheme in which the pulse width is shorter than the interval at which to deliver a code, and therefore the potential temporarily returns to zero. The waveform shown at the middle of FIG. 10 indicates a modulated signal according to a PPM (pulse position modulation) scheme. The PPM is a modulation scheme for correlating information of the digital signal (in the figure, two-bit information) to pulse positions of the carrier wave (here, four positions). The waveform shown at the bottom of FIG. 10 indicates a CDMA-modulated signal. The CDMA is a modulation scheme for correlating information of the digital signal (in the figure, one-bit information) to codes with their respective unique pulse sequences. Note that the waveforms shown in FIGS. 9 and 10 are simplified for description, and differ from waveforms of actual signals outputted from the modulators 515a to 515c.

Here, as for the CDMA scheme, it is known that any codes other than the unique code as described above can be considered to be noise, and therefore only a desired modulated signal can be separated from another modulated signal or suchlike on the receiver side based on the unique code. Accordingly, when a CDMA light signal is used in the present embodiment, there is no particular need for any features (e.g., the through-holes 71a to 71c) devised to cause rays of light from the white LEDs 40a to 40c to be incident on only their respective uniquely-associated light detectors 90a to 90c, and, for example, light from the light guide plate may be received. Furthermore, only one light detector may be provided. Even in such a case, it is still possible to realize the multiple access with a simplified configuration.

Based on the current received from the current source 514, the modulators 515a to 515c use a modulated signal subjected to modulation according to a modulation scheme as described above as a drive current to drive their respective white LEDs 40a to 40c. For example, the white LEDs 40a to 40c each output an intensity-modulated light signal LS based on the received modulated signal. In addition, the adjuster 516 monitors the drive currents for the white LEDs 40a to 40c from the modulators 515a to 515c, as well as temperatures, etc., of the white LEDs 40a to 40c, and if the monitoring results indicate deviations from predetermined values, adjustments are made such that the output current of the current source 514 has a desired value. A detailed configuration of the receiver circuit 100 will be described next with reference to FIG. 11.

### <1.5 configuration of the receiver circuit>

FIG. 11 is a block diagram illustrating a detailed configuration of the receiver circuit 100. As shown in FIG. 11, the receiver circuit 100 includes: drive circuits 101a to 101c for receiving an electric signal obtained via conversion from the light signal LS by their respective light detectors 90a to 90c; demodulators 102a to 102c for demodulating the electric signal outputted from their respective drive circuits 101a to 101c; a restoring portion 103 for restoring separated signals from the demodulators 102a to 102c; a demultiplexer 104 for receiving a signal from the restoring portion 103 and extracting the video signal VS and the power control signal PS therefrom; and a receiver-side power controller 105 for receiving the power control signal PS outputted from the demultiplexer 104. In addition, the video signal VS outputted from the demultiplexer 104 is provided to the display control circuit 200.

The demodulators 102a to 102c included in the receiver circuit 100 employ a demodulation scheme corresponding to the modulation scheme employed by the modulators 515a to 515c, the restoring portion 103 employs a restoring scheme corresponding to the multi-linking scheme employed by the separator 512, and the demultiplexer 104 employs a demodulation scheme corresponding to the multiplexing scheme employed by the multiplexer 511. These schemes are well-known, and therefore any descriptions thereof will be omitted.

The receiver-side power controller 105 performs control to stop the operation of each circuit included in the receiver circuit 100 when the power control signal PS received from the demultiplexer 104 is deactivated. Note that the operations of these circuits are started when the receiver-side power controller 105 receives an unillustrated control signal.

Here, the receiver circuit 100 may further include a carrier detector for monitoring the current outputted from one or more of the light detectors 90a to 90c. Even when the operation of each circuit included in the receiver circuit 100 is stopped, the carrier detector continuously monitors the presence or absence of the current, thereby detecting the light signal. Upon detection of the light signal, the carrier detector sends a predetermined detection signal to the receiver-side power controller 105, and upon reception of the detection signal, the receiver-side power controller 105 performs control to start the operation of each circuit included in the receiver circuit 100. Note that the carrier to be detected by the carrier detector is merely illustrative, and, to be precise, it refers to light itself, and also encompasses any detected light that does not function as a carrier.

In addition, when the carrier detector is provided, the multiplexer 511 and the demultiplexer 104 may be omitted, i.e., the power control by the power control signal PS might not be performed. In such a configuration, the carrier detector sends an active detection signal to the receiver-side power controller 105 upon detection of the light signal, whereas the receiver-side power controller 105 performs control to start the operation of each circuit included in the receiver circuit 100 (or maintain the operation if they are operating) upon reception of the active detection signal control. In addition, when the carrier detector detects no light signal (more preferably, when a predetermined term has passed after the detection of the light signal) , it sends a predetermined inactive detection signal to the receiver-side power controller 105, and the receiver-side power controller 105 performs control to stop the operation of each circuit included in the receiver circuit 100 (or maintain the stopped state if their operations are stopped) upon reception of the inactive detection signal.

Note that in these cases, the receiver-side power controller 105 may perform control to stop or start the operation of each circuit included in the TFT substrate 2, such as the display control circuit 200, in a manner as described above. By doing so, the operation of each circuit included in the TFT substrate 2 is automatically stopped or started when the white LEDs 40a to 40c stop or start operating, and therefore the power control for each circuit included in the TFT substrate 2 can be performed with a simplified configuration.

### <2. second embodiment>

Next, in the present embodiment, unlike in the first embodiment, so-called dimming control is operated, in which when the white LEDs 40a to 40c are operating, i.e. , when backlighting is performed, the white LEDs 40a to 40c repeat lighting and extinguishing at extremely short time intervals, for example, with an invisible frequency of about 100 [KHz]. The dimming control is performed by changing the duty ratio indicating the ratio of lighting time and extinguishing time, and for example, the overall brightness of the white LEDs 40a to 40c decreases as the proportion of the extinguishing time increases. Accordingly, for example, it is possible to provide backlighting with desired brightness suitable for the brightness of the outside light, and it is also possible to reduce power consumption compared to the case where the white LEDs 40a to 40c are always lit. The circuit configuration of the liquid crystal display device for performing such dimming control is described.

Here, because the structure of the liquid crystal display device in the present embodiment and the overall circuit configuration thereof are similar to those in the first embodiment, the same elements are denoted by the same characters, and any descriptions thereof will be omitted. Differences from the first embodiment lie in that the present liquid crystal display device receives no power control signal PS, but instead, it externally receives a dimming parameter signal LC for dimming control. Accordingly, a detailed configuration of an LED drive circuit in the present embodiment will be described first.

### <2.1 configuration of the LED drive circuit>

FIG. 12 is a block diagram illustrating a detailed configuration of an LED drive circuit 52 in the second embodiment of the present invention. The LED drive circuit 52 receives a dimming parameter signal LC for dimming control from outside the present liquid crystal display device, in place of the power control signal PS that is received in the first embodiment, as shown in FIG. 12.

Therefore, the multiplexer 511 in the present embodiment receives and multiplexes the video signal VS and the dimming parameter signal LC. Note that these signals are externally provided to the multiplexer 511 via the input terminal 59 of the FPC board 50, as described above. The dimming parameter signal LC is a parameter for dimming control, concretely, a numerical value indicating the duty ratio.

In addition, the LED drive circuit 52 includes a dimming controller 517 for receiving the dimmingparameter signal LC, in place of the backlight power controller 513 that is provided in the first embodiment, as shown in FIG. 12. In order to cause the white LEDs 40a to 40c to output the light signal LS with the duty ratio, which is included in the dimming parameter signal LC and has been subjected to modulation according to a predetermined PWM (pulse width modulation) scheme, the dimming controller 517 changes the amount of current to be provided from the current source 514 to the modulators 515a to 515c. Note that when the white LEDs 40a to 40c are subj ected to such dimming control by a pulse according to PWM or suchlike, the pulse can be used for baseband transmission, and therefore it is possible to widen the dynamic range, resulting in efficient optical transmission.

FIG. 13 is a simplified waveform diagram of the light signal LS subjected to the dimming control as described above, and more specifically, the waveforms shown at the top and the bottom of FIG. 13 are representations for describing overall variations in the intensity of the light signal LS and a portion thereof, respectively. Here, the light signal LS that is delivered during "ON" term (lighting term) in the signal waveform shown in FIG. 13 is modulated by the modulators 515a to 515c, but no light signal LS is delivered during OFF term (extinguishing term) , and therefore naturally, no modulation is performed by the modulators 515a to 515c. Accordingly, during this term, the LED drive circuit 52 in the present embodiment cannot transmit the video signal VS by the light signal LS. Therefore, the dimming controller 517 controls the separator 512 (or the multiplexer 511) to stop delivering the signal during the term. Note that in this case, the separator 512 (or the multiplexer 511) has a predetermined internal FIFO memory, and data received while the signal delivery is being stopped is temporarily stored in this memory. A detailed configuration of the receiver circuit 120 for receiving the light signal LS subjected to such dimming control will be described next.

### <2.2 configuration of the receiver circuit>

FIG. 14 is a block diagram illustrating a detailed configuration of the receiver circuit 120 in the second embodiment. The receiver circuit 120 includes a dimming signal analyzer 106 for analyzing the received dimming parameter signal LC, in place of the receiver-side power controller 105 in the first embodiment, as shown in FIG. 14.

The dimming signal analyzer 106 receives the dimming parameter signal LC demodulated by the demultiplexer 104, and analyzes a suitable light receiving sensitivity and a suitable amplification factor in accordance with the duty ratio included in the dimming parameter signal LC. For example, the dimming signal analyzer 106 has memorized therein a table indicating the correspondence between the light receiving sensitivity and the amplification factor that are suitable for each duty ratio, and it calculates the light receiving sensitivity and the amplification factor based on the correspondence table. The dimming signal analyzer 106 performs control to adjust the light receiving sensitivities and the amplification factors of the drive circuits 101a to 101c so as to match the calculated light receiving sensitivity and amplification factor.

In addition, the dimming signal analyzer 106 refers to the duty ratio included in the dimming parameter signal LC to estimate the start points (and the end points) of the ON term and the OFF term as shown at the bottom of FIG. 13, and provides a signal indicating the start points to the demodulators 102a to 102c and the restoring portion 103. For example, the dimming signal analyzer 106 includes an internal clock recovery circuit consisting of well-known phase locked loop (PLL) circuits for receiving the video signal VS from, for example, the demultiplexer 104 and generating synchronous clocks, and by measuring the clocks, it is possible to estimate the start points of the ON term and the OFF term even when no video signal VS is outputted.

The demodulators 102a to 102c demodulate electric signals outputted from the drive circuits 101a to 101c upon reception of the signal indicating the start of the ON term from the dimming signal analyzer 106, and they stop demodulating the electric signals outputted from the drive circuits 101a to 101c upon reception of the signal indicating the start of the OFF term. Similarly, the restoring portion 103 restores the separated signals from the demodulators 102a to 102c upon reception of the signal indicating the start of the ON term from the dimming signal analyzer 106, and it stops the restoring operation upon reception of the signal indicating the start of the OFF term. Therefore, the demodulating operation and the restoring operation are continued even in the OFF term, making it possible to prevent generation of any erroneous video signal VS. Note that the restoring portion 103 preferably includes a buffer memory for temporarily storing a signal containing the restored video signal VS in order to continue generating the video signal VS not only in the ON term but also in the OFF term.

Here, the receiver circuit 120 may include a carrier detector for monitoring the current outputted from one or more of the light detectors 90a to 90c, in place of the dimming signal analyzer 106. In the case where the carrier detector is provided, the multiplexer 511 and the demultiplexer 104 are omitted, i.e., no dimming parameter signal LC is provided to the receiver circuit 120. In such a configuration, the carrier detector sends an active detection signal to the demodulators 102a to 102c and the restoring portion 103 upon detection of the light signal, whereas it sends an inactive detection signal to the demodulators 102a to 102c and the restoring portion 103 upon detection of no light signal. In addition, the carrier detector has memorized therein the lengths of the active term and the inactive term, and calculates the duty ratio for dimming control based on the memorized ratio of them to analyze the light receiving sensitivity and the amplification factor that are suitable for the duty ratio. The carrier detector performs control to adjust the light receiving sensitivities and the amplification factors of the drive circuits 101a to 101c so as to match the calculated light receiving sensitivity and amplification factor.

Note that the carrier detector may include a well-known clock recovery circuit consisting of PLL circuits, which is used to estimate the term in which the light signal is detected and the term in which no light signal is detected, thereby suitably generating the active detection signal or the inactive detection signal.

The demodulators 10.2a to 102c and the restoring portion 103 perform the demodulating operation and the restoring operation when the detection signal is active, whereas they do not perform the demodulating operation and the restoring operation when the detection signal is inactive. Thus, it is possible to prevent any erroneous video signal VS from being generated due to that the demodulating operation and the restoring operation are continued even in the OFF term.

Note that in this case, when an asynchronous scheme is employed as the modulation scheme of the modulators 515a to 515c, a light signal containing a stop bit is delivered even if no information is available, and therefore the demodulators 102a to 102c and the restoring portion 103 start the demodulating operation and the restoring operation upon detection by the carrier detector of a start bit indicating the start of information contained in the light signal, while continuing the demodulating operation and the restoring operation upon detection of the stop bit by the carrier detector. Therefore, it is not necessary for the signal analyzer 106 to estimate the start points of the ON term and the OFF term.

Also, in this case, a power controller may be additionally provided, so that the power controller performs control to stop the operation of each circuit included in the TFT substrate 2, such as the display control circuit 200, when the detection signal continues to be inactive for a predetermined term, and thereafter start the operation of each circuit when the detection signal is activated. As a result, each circuit included in the TFT substrate 2 automatically starts or stops operating when the white LEDs 40a to 40c stops or starts operating, thereby making it possible to perform power control for each circuit included in the TFT substrate 2 with a simplified configuration.

Furthermore, the liquid crystal display device in the present embodiment is configured to receive no power control signal PS, but it may be configured to receive the dimming parameter signal LC, and also to receive the power control signal PS as in the first embodiment. That is, the liquid crystal display device in the present embodiment can include circuits of the liquid crystal display device in the first embodiment.

### <3. third embodiment>

Next, unlike in the first and second embodiments, the liquid crystal display device in the present embodiment has the function of reproducing audio, in addition to the main function of displaying video. Specifically, in the present embodiment, the video signal VS is transmitted by the FPC board for video signal transmission, which is configured as conventionally, and only an additionally-provided audio signal AS is transmitted by a light signal. The circuit configuration of the liquid crystal display device in such a case will be described.

Here, because the structure of the liquid crystal display device in the present embodiment is similar to that in the first embodiment, the same elements are denoted by the same characters, and any descriptions thereof will be omitted. In addition, because the overall circuit configuration of the present liquid crystal display device is also analogous to that in the first embodiment, the same elements are denoted by the same characters, and any descriptions thereof will be omitted. However, in the present embodiment, unlike in the first embodiment, the video signal VS is directly provided to the display control circuit 200 included in the TFT substrate 20 via the FPC board for video signal transmission as conventionally, and the audio signal AS externally provided to the backlight portion 3 is transmitted to the TFT substrate 20 after being converted into a light signal LSa. The circuit configuration of the liquid crystal display device will be described with reference to FIG. 15.

FIG. 15 is a block diagram illustrating the configuration of the liquid crystal display device according to the third embodiment of the present invention. The liquid crystal display device includes the light detector 90, the receiver circuit 130, the display control circuit 200 to be provided with the video signal VS via the FPC board 58 for video signal transmission, the video signal line drive circuit 300, the scanning signal line drive circuit 400, the display portion 500, an audio output circuit 600, and a piezoelectric loudspeaker 700, which are formed on the TFT substrate 20 of the liquid crystal display panel 2, and it also includes the white LED 40, and the LED drive circuit 53 for receiving the audio signal AS, which are included in the backlight portion 3.

The LED drive circuit 53 differs from its counterpart in the first embodiment in that it receives the audio signal AS, but its internal circuit configuration can be considered to be the same, and therefore the description thereof will be omitted. Note that the multiplexer 511 is omitted from the LED drive circuit 53, but it is required when further transmitting the power control signal PS or the dimming parameter signal LC. The white LED 40 outputs the light signal LSa obtained via conversion (modulation) of the audio signal AS.

The light detector 90 receives the light signal LSa, and provides it to the receiver circuit 130 after conversion to an electric signal. The receiver circuit 130 differs from its counterpart in the first embodiment in that it outputs the audio signal AS, but its internal circuit configuration can be considered to be the same, and therefore the description thereof will be omitted. Note that the demultiplexer 104 is omitted from the receiver circuit 130.

The audio output circuit 600 receives the audio signal AS from the receiver circuit 130 to drive the piezoelectric loudspeaker 700. The audio output circuit 600 has a well-known circuit configuration, but its circuit example will be described with reference to FIG. 16.

FIG. 16 is a block diagram illustrating the circuit configuration of the audio output circuit 600. The audio output circuit 600 includes a right-and-left-channel synchronizer 601, a PCM data output portion 602, a data clock controller 603, a D/A converter 604, and an amplifier 605.

The right-and-left-channel synchronizer 601 receives the audio signal AS, and outputs a synchronous signal for synchronously reproducing right and left audio. The PCM data output portion 602 receives the audio signal AS, and extracts audio data included in the audio signal AS and conforming to a PCM (pulse code modulation) scheme before providing it to the D/A converter 604. The data clock controller 603 receives the audio signal AS, and reproduces a data clock for synchronization.

The D/A converter 604 converts the audio data, which is digital data, into an analog signal based on the synchronous signal and the data clock. The amplifier 605 amplifies the analog signal to a predetermined sound magnitude, and drives the piezoelectric loudspeaker 700 by providing the audio signal thereto.

As such, even in the case of adding a new audio reproducing function to the conventional display function, a signal associated therewith is transmitted by a light signal, and therefore it is possible to eliminate the need to increase the number of pins of the FPC board to be connected to the TFT substrate 20.

Note that the audio reproducing function has been illustrated here as a typical additional function, but this not restrictive, and the above configuration is widely applicable so long as the function to be added to the liquid crystal display device allows transmission of external signals. In addition, in contrast to this embodiment, signal transmission for any additional function such as the audio reproducing function may be carried out via the FPC, and the video signal VS may be transmitted by a light signal.

### <4. fourth embodiment>

Next, unlike in the above embodiments, the TFT substrate 20 of the present liquid crystal display device has only the light detector 90c formed therein, and the light detectors 90a and 90b are omitted, but multi-linking is realized by only the light detector 90c receiving light signals for transmitting different pieces of information from their respective white LEDs 40a to 40.

FIG. 17 is a diagram for describing the positional relationship between the light detector and the white LED in the present embodiment. Only the light detector 90c is formed on the bottom surface of the liquid crystal display panel 2, i.e., the surface opposite to the display surface, as shown on the bottom left side in FIG. 17. Note that the black matrix 11 is formed on the top surface of the liquid crystal display panel 2, i.e., the display surface, as described earlier in conjunction with FIG. 3. In addition, the through-holes 71a and 71b described earlier in conjunction with FIG. 2 as being formed on the resin chassis 70 are omitted, and only the through-hole 71c is formed.

Rays of light emitted from the white LEDs 40a to 40c disposed on the backlight portion 3 are all provided to the light detector 90c via the through-hole 71c, as shown in FIG. 17, but the light from the white LED 40a furthest from the light detector 90c is the last to reach the light detector 90c among the rays of light from the white LEDs, and the light from the nearest white LED 40c is the first to reach the light detector 90c among the rays of light from the white LEDs. In the present embodiment, signal transmission is realized by taking advantage of the differences between arrival times of light in accordance with the distances from the white LEDs 40a to 40c to the light detector 90c. This will be described with reference to FIG. 18.

FIG. 18 is a waveform diagram schematically illustrating light signals from the white LEDs 40a to 40c immediately before being received by the light detector 90c. Note that the light signals from the white LEDs 40a to 40c are simultaneously outputted. In addition, the signals from the white LEDs 40a to 40c are PWM signals subj ected to dimming control and having the above described ON term and OFF term shown in FIG. 13.

Referring to FIG. 18, the ON term of the light signal outputted from the white LED 40c and being the first to reach the light detector 90c overlaps with the ON terms of the light signals outputted from the white LEDs 40a and 40b, but terms for receiving modulation (modulation terms or signal transmission terms) included in the ON terms are determined so as not to overlap with one another. As such, each of the light signals from the white LEDs 40a to 40c is not affected by another light signal being modulated in the modulation term during a combined term (hereinafter, referred to as a "guard term") including a term for receiving no modulation (a no-modulation term or no-signal-transmission term) within the ON term, and the OFF term. Thus, by suitably adjusting the ratio of the modulation term and the guard term in each light signal, it is possible to determine the modulation terms of the light signals so as not to overlap with one another. In this case, with a simple configuration in which only one light detector 90c is provided, it is possible to readily realize the signal transmission taking advantage of the differences between arrival times of light. In addition, with this configuration, signal transmission by the white LEDs 40a to 40c is not performed during the no-modulation term, and therefore it is possible to reduce the burden per single white LED, resulting in prolongation of its emission lifetime.

Note that in the above embodiment, the light detector 90c is disposed immediately above the white LED 40c, but the position of the light detector 90c is not particularly limited so long as the position causes the differences between arrival times of light from the white LEDs 40a to 40c.

### <2. effects of the embodiments>

By using the light signals, rather than the radio waves, as described above, it becomes possible to avoid an increase in the number of pins of the FPC board 58 for video signal transmission connected to the TFT substrate 20 in the third embodiment, regardless of the increase in functions, and it also becomes possible to eliminate the necessity for the FPC board 58 for video signal transmission in the first and second embodiments.

In addition, the white LEDs 40a to 40c for backlighting are also used for delivering the light signals, and therefore it is not necessary to additionally provide a new light emitting device for optical transmission; the circuit for driving the white LEDs 40a to 40c for backlighting is also used for generating the light signals, making it possible to minimize production cost.

Note that radio waves can be used as media for signal transmission, thereby configuring a signal transmission mechanism that does not use the FPC board, but the influence of electromagnetic interference (EMI) caused by the use of radio waves is not to be ignored, and each country has various complex legal restrictions on use of radio waves. Therefore, it is difficult to use radio waves, and the optical transmission mechanisms in the above embodiments are preferred.

### <3. variants>

### <3.1 exemplary configurations for power supply to the TFT substrate>

In the first, second, and fourth embodiments, the FPC board for video signal transmission can be omitted, but in reality, an FPC board (with fewer pins) is required for power supply to various circuits included in the TFT substrate 20. FIG. 19 is a top view illustrating the FPC for power supply. The FPC for power supply has fewer pins, but requires the step of connecting an external power source thereto, and for example, there is a possibility that a connector might be detached due to impact or suchlike. Accordingly, to overcome such problems, for example, first and second variants as shown in FIGS. 20 and 21 are conceivable.

FIG. 20 is a top view for describing the first variant in which power is supplied by a coil, rather than by the FPC for power supply. A coil 191 provided in the backlight portion 3 shown in FIG. 20 is supplied with a predetermined alternate current from an external alternate current source or an unillustrated inverter or suchlike for converting into an alternate current the current from the current source 514 for driving the LEDs. In addition, a coil 192 formed by a thin film is provided on a predetermined position on the TFT substrate 20 of the liquid crystal display panel 2, the predetermined position being opposed to the coil 191, and mutual induction of the coils 191 and 92 excites a predetermined voltage in the coil 192. The voltage excited in the coil 192 drives each circuit on the TFT substrate 20.

FIG. 21 is a top view for describing the second variant in which power is supplied by a pin formed on the TFT substrate, rather than by the FPC for power supply. The pin 93 shown in FIG. 21 is provided on the TFT substrate 20 so as to be in contact with a pin 94 provided at a predetermined position on the backlight portion 3 on the opposite side. The pin 94 is supplied with a predetermined current from the external current source or the current source 514 for driving the LEDs . Current is supplied to each circuit on the TFT substrate 20 via the pin 93 in contact with the pin 94 when the liquid crystal module 4 is formed.

Furthermore, a third variant is conceivable, in which an element for converting light into a current (typically, a solar cell) is formed on the TFT substrate 20 instead of forming the FPC for power supply, and the energy of light from the white LEDs 40a to 40c (or other illumination light or outside light) that is provided to the element is converted into a current, which is utilized as a drive current for each circuit on the TFT substrate 20.

Note that the above configuration is intended for providing power to various circuits included in the TFT substrate 20, but it can also be applied to provide power not only to the TFT substrate 20 but also to the backlight portion 3. Specifically, in each of the above embodiments, the FPC board 50 provides power to the backlight portion 3, but instead of this, a coil connected via mutual induction to the coil coupled to the external power source or a pin in contact with the pin coupled to the external power source may be included in the backlight portion 3 (or the liquid crystal display panel 2). In such a case, any FPC board can be omitted from the liquid crystal module 4, and therefore it becomes possible to freely detach the liquid crystal module from a casing of an external device (e.g., a personal computer or a cell phone) connected thereto.

FIG. 22 is a simplifiedperspective view for describing the configuration of the liquid crystal module freely detachable from the casing of the external device. The casing 9 of the external device, such as a cell phone, has a housing portion with power supply pins 194 provided on its internal surface and connected to an unillustrated power source of the device, and power receiving pins 193 that can be brought into contact with the power supply pin 194 are provided in a corresponding position on the surface of the liquid crystal module 4, as shown in FIG. 22. When the liquid crystal module 4 is housed in the casing 9, the power supply pins 194 and the power receiving pins 193 are brought into contact with each other, so that power is supplied to the liquid crystal module 4. This configuration facilitates repair and exchange of the liquid crystal module 4, and also allows the liquid crystal module 4 to be readily used as a display device for another device.

### <3.2 other variants>

The three white LEDs 40a to 40c are used in the above embodiments, but instead of using them, a red LED, a green LED, and a blue LED may be used. Light of three primary colors from these LEDs can result in white backlighting, which is an additive mixture of their colors. In this case, a color filter for transmitting only the emission colors of the LEDs is preferably provided over the through-holes 71a to 71c formed in the resin chassis 70 shown in FIG. 2. As a result, it is possible to block light from LEDs other than an LED having a color corresponding to the predetermined light detector 90, thereby preventing the light from reaching the light detector 90. Note that the color is not necessarily limited to white so long as it is suitable for backlighting, and the color type of the LED is also not restrictive. In addition, by suitably switching the LED for light emission, it becomes possible to suitably select the color of backlight.

In addition, the white LEDs 40a to 40c may be used only for backlighting, and one or more laser light sources may be provided exclusively for optical transmission. In this case, it is necessary to additionally provide the laser light source (s), but by using the laser light source (s) , it becomes possible to perform high-speed (high-density) optical transmission compared to the case of using the LEDs. Furthermore, the position of the light detector 90 for receiving light from the laser light source(s) can be determined without relation to the positions of the LEDs, and therefore for example, it is possible to form the light detector 90 in an unoccupied space on the TFT substrate 20 (e.g., the top left corner in FIG. 1). In this case, the TFT substrate 20 and the backlight portion 3 are fixed in a strict positional relationship for realizing an optimal liquid crystal display, so that the laser light source (s) and the light detector 90 are always at a constant distance(s) from each other, and no individual variability is likely to occur, making it possible to eliminate the necessity for calibration required for general optical transmission devices. Note that instead of providing the exclusive laser light source (s), an LED (s) exclusively used for optical transmission may be provided. In addition, other light emitting devices, such as organic EL (electroluminescence) elements, which are capable of modulating light intensity or suchlike, can be used. In such a case of providing the light emitting device exclusively used for optical transmission, it is not always necessary for the liquid crystal display device to have the backlight portion 3, and for example, a reflective liquid crystal display device or an emissive display device using organic EL elements is also applicable.

In the above embodiments, the through-holes 71 are formed in the light signal path such that rays of light from the white LEDs 40 only reach their corresponding light detectors 90, but the through-holes 71 might not be provided, and a well-known optical fiber, reflecting plate, or the like, may be provided in place of the through-holes 71. The light signal path that is formed using the well-known optical fiber, reflecting plate, or the like, is an alternative to the light signal path secured by providing the through-holes 71.

The white LEDs 40a to 40c are all used for transmitting the video signal VS in the first and second embodiments, and for transmitting the audio signal in the third embodiment, but, for example, it may be so configured that one of the white LEDs 40a to 40c is used for transmitting the audio signal, and other white LEDs are used for transmitting the video signal VS.

In the above embodiments, the multi-linking scheme is employed, in which the three white LEDs 40a to 40c and their corresponding light detectors 90a to 90c form three different optical transmission paths, but only one optical transmission path may be formed by a pair of them, e.g., the white LED 40c and the light detector 90c. In this case, the multi-linking scheme is not employed, and therefore the light detectors 90a and 90b, the separator 512, the restoring portion 103, the modulators 515a and 515b, and the demodulators 102a and 102b are omitted. In addition, the through-holes 71a and 71b formed in the resin chassis 70 shown in FIG. 2 are also omitted. Note that for the purpose of backlighting, the white LEDs 40a and 40b are not omitted, and they emit light by virtue of a drive current directly supplied from the current source 514 without involving the modulators 515a and 515b. Furthermore, in this case, the light from the white LED 40c may be received by the light detector 90c after passing through the light guide plate. As a result, it also becomes possible to form the light detector 90c in the display portion 500 shown in FIG. 7.

In addition, when a plurality of light detectors are provided in the display portion 500, and a well-known image sensing function is realized by these light detectors, one or more of the light detectors may be the light detector(s) 90. The light detector(s) 90 in the display portion 500 has/have the image sensing function for receiving external light when the white LEDs 40 are not lit, and when they are lit, the image sensing function is disabled and the light from the white LED 40c is received after passing through the light guide plate, making it possible to receive the light signal.

Here, for example, if a sufficient amount of light is not provided by only the white LED 40c, the modulator 515c may provide the same drive currents for driving the white LEDs 40a to 40c, including modulated signals. Note that in this case also, the light detector 90c can be formed in the display portion 500.

In addition, one or more sets of red, green, and blue LEDs (e.g., six of them) may be used in place of the white LEDs 40a to 40c, as described above. In this case, referring to FIG. 6, the light detectors 90, which are thin film PIN-type photodiodes, have relatively high sensitivity to blue, and therefore it is preferable to supply the blue LED with the drive current including the modulated signal from the modulator 515c, and to use the blue LED for optical transmission.

Furthermore, an inexpensive cold cathode fluorescent tube (CCFT) may be used in place of the white LEDs 40a to 40c. Normally, only one CCFT is used, and in such a case, the multi-linking cannot be realized, but a voltage applied to the CCFT is modulated with a well-known modulation scheme by, for example, performing modulation using a signal outputted from an inverter for driving the CCFT as a carrier wave, thereby making it possible to realize the optical transmission with a more simplified configuration.

Moreover, in the above embodiments, the white LED 40 performs backlighting for reflection display in the liquid crystal display device, but backlighting (e.g., supplemental lighting in a dark place) other than the backlighting for the liquid crystal display device may be performed, or lighting may be performed from a direction (e.g. , a lateral direction) other than the direction opposite to the display surface of the TFT substrate 20.

Dimming control is performed in the second embodiment, but with a conf iguration similar to the case of the dimming control, for example, it is also possible to perform so-called intermittent drive control in which backlights are lit only in the later part of the display term such that display properties (referred to as "hold-type") of the liquid crystal display device for holding the display status are brought close to display properties (referred to as "impulse-type") of the CRT display device or such like for providing an instantaneous display, in order to improve blurriness of movie display, for example. In this case, for example, the ON term and the OFF term can be determined based on the vertical synchronous signal included in the video signal VS, without receiving the dimming parameter signal LC, and therefore it is possible to control each element based on the determination results.

In the fourth embodiment, signal transmission is realized by taking advantage of the differences between arrival times of light in accordance with the distances from the white LEDs 40a to 40c to the light detector 90c, but it is also possible to determine modulation terms of light signals so as not to overlap with one another, by causing the white LEDs 40a to 40c to be lit at their respective different times, i.e. , by suitably adjusting the time to start the modulation term (or guard term) of each light signal. In this case also, it is possible to reduce the burden per white LED, resulting in prolongation of its emission lifetime.

### INDUSTRIAL APPLICABILITY

The present invention is applied to active-matrix display devices, each being provided with a unit including, for example, a display portion, such as a liquid crystal display panel, and a unit for receiving signals from, for example, an external device, such as a backlight unit, and it is particularly suitable for small-sized active-matrix display devices.

## Claims

1. An active-matrix display device having a plurality of pixel formation portions disposed in the form of a matrix at their respective intersections between a plurality of video signal lines and a plurality of scanning signal lines, the device comprising:
a first unit having provided therein the pixel formation portions and predetermined circuitry; and
a second unit for externally receiving a signal to be provided to the circuitry included in the first unit, the second unit being fixed in a position opposing to the first unit,
wherein the second unit includes an optical transmitter for optically transmitting the signal to be provided to the circuitry to the first unit, and
wherein the first unit includes an optical receiver for receiving the signal optically transmitted by the optical transmitter, and providing the signal to the circuitry.

2. The display device according to claim 1, wherein the optical transmitter includes:
a backlight source for emitting illumination light for display to a surface of the first unit that is opposite to a display surface; and
a driver for driving the backlight source based on the signal to be provided to the circuitry.

3. The display device according to claim 2, wherein the driver subjects the signal to be provided to the circuitry to conversion for baseband transmission, and drives the back light source in accordance with a signal obtained by the conversion.

4. The display device according to claim 2, wherein the driver performs predetermined modulation for band transmission using the signal to be provided to the circuitry as a modulation signal, and drives the backlight source in accordance with a signal obtained by the modulation.

5. The display device according to claim 2,
wherein the backlight source is a sheet illuminator for irradiating the first unit with the illumination light almost on the entire surface opposite to the display surface, and
wherein the optical receiver receives the illumination light from the backlight source.

6. The display device according to claim 2,
wherein the optical transmitter includes a light guide for guiding illumination light from the backlight source so that the first unit is irradiated with the light almost on the entire surface opposite to the display surface, and
wherein the optical receiver receives the illumination light passing through the light guide.

7. The display device according to claim 2, wherein the backlight source includes a light emitting diode.

8. The display device according to claim 7, wherein the light emitting diode included in the backlight source emits only white light.

9. The display device according to claim 7, wherein the backlight source includes a plurality of light emitting diodes.

10. The display device according to claim 9,
wherein the driver separates the signal to be provided to the circuitry into a plurality of signals for multi-linking between the light emitting diodes and the optical receiver, and drives the light emitting diodes based on the signals, and
wherein the optical receiver includes:
a plurality of light detectors uniquely associated with the light emitting diodes; and
a restoring portion for restoring the signal to be provided to the circuitry from the signals respectively received by the light detectors.

11. The display device according to claim 9,
wherein the driver separates the signal to be provided to the circuitry into a plurality of separate signals for which transmission terms in which to transmit the signal to be provided to the circuitry and no-transmission terms are determined such that the transmission terms do not overlap with one another in the optical receiver, and the driver drives the light emitting diodes based on the separate signals, and
wherein the optical receiver includes:
light detectors for receiving light from their respective light emitting diodes; and
a restoring portion for restoring the signal to be provided to the circuitry from the signals received by their respective light detectors.

12. The display device according to claim 11,
wherein the light emitting diodes are disposed at predetermined intervals,
wherein the driver separates the signal to be provided to the circuitry into a plurality of separate signals for which the same transmission terms in which to transmit the signal to be provided to the circuitry and no-transmission terms are determined such that the transmission terms do not overlap with one another in the optical receiver, and the driver drives the light emitting diodes based on the separate signals; and
wherein the light detectors receive the light from their respective light emitting diodes at different times delayed in accordance with distances from positions of the light emitting diodes.

13. The display device according to claim 9, wherein the light emitting diodes include a plurality of light emitting diodes for emitting light of different colors from one another.

14. The display device according to claim 13, wherein the driver drives only one of the light emitting diodes for emitting light of different colors based on the signal to be provided to the circuitry, the diode to be driven emitting a color to which the optical receiver has the highest sensitivity.

15. The display device according to claim 13, wherein color filters are provided on optical paths from the light emitting diodes to the optical receiver, the color filters each transmitting light from only one corresponding light emitting diode.

16. The display device according to claim 13, further comprising a chassis provided between the first unit and the second unit to support the first unit or the second unit,
wherein the chassis has a through-hole provided therein to form an optical path from the optical transmitter to the optical receiver.

17. The display device according to claim 2,
wherein the driver drives the backlight source based on the signal to be provided to the circuitry only for a term in which the backlight source is being lit, and
wherein the optical receiver receives an optically-transmitted signal only for the term in which the backlight source is being lit.

18. The display device according to claim 17, wherein the optical receiver includes a detector for detecting light from the optical transmitter, and receives the optically-transmitted signal only for a term in which the light is being detected by the detector.

19. The display device according to claim 17,
wherein the driver drives the backlight source such that lighting and extinguishing are repeated at predetermined short time intervals and a predetermined ratio, and the driver drives the backlight source based on a signal containing a signal indicating the ratio and the signal to be provided to the circuitry, and
wherein based on the ratio indicated by the received signal, the optical receiver receives the optically-transmitted signal only for the term in which the backlight source is being lit.

20. The display device according to claim 17,
wherein the driver drives the backlight source such that lighting and extinguishing are repeated at predetermined short time intervals and a predetermined ratio, and the driver drives the backlight source based on a signal containing a signal indicating the ratio and the signal to be provided to the circuitry, and
wherein based on the ratio indicated by the received signal, the optical receiver adjusts either light receiving sensitivity or an amplification factor, or both, such that the signal to be provided to the circuitry is satisfactorily received.

21. The display device according to claim 1,
wherein the circuitry includes circuits for driving the video signal lines and the scanning signal lines, respectively, and
wherein the optical transmitter optically transmits a video signal to be provided to the circuitry to the first unit.

22. The display device according to claim 1,
wherein the circuitry includes an audio output circuit for outputting audio based on a signal provided thereto, and
wherein the optical transmitter optically transmits an audio signal to be provided to the circuitry to the first unit.

23. The display device according to claim 1,
wherein the optical transmitter includes light emitting devices for optical transmission,
wherein the optical receiver includes light detectors associated with the light emitting devices, and
wherein the light detectors are integrally formed with the circuitry on the first unit.

24. The display device according to claim 23, wherein the light emitting devices constitute a laser light source.

25. The display device according to claim 23, wherein the light emitting devices constitute a fluorescent tube light source.

26. The display device according to claim 1,
wherein the second unit includes a second coil through which an externally-received alternate current flows,
wherein the first unit includes a first coil having a current excited via mutual induction with the second coil, and
the first coil provides the excited current to the circuitry as power.

27. The display device according to claim 1,
wherein the first unit includes a solar cell, and
wherein the solar cell receives light from the optical transmitter or predetermined illumination light, thereby generating a current to be provided to the circuitry as power.
